# EUROPÄISCHE PATENTSCHRIFT

(11) **EP 2 593 529 B1**
(45) Veröffentlichungstag und Bekanntmachung des Hinweises auf die Patenterteilung: **14.10.2015**
(21) Anmeldenummer: 11735985.1
(22) Anmeldetag: 29.06.2011
(51) Int. Cl.: C09K 19/52, C09K 19/54, C09K 19/42, C09K 19/04, G02F 1/1333

(54) **FLÜSSIGKRISTALLINE MEDIEN UND FLÜSSIGKRISTALLANZEIGEN MIT POLYMERSTABILISIERTER HOMÖOTROPER AUSRICHTUNG**
LIQUID CRYSTALLINE MEDIA AND LIQUID CRYSTAL DISPLAYS WITH A POLYMER-STABILIZED HOMEOTROPIC ORIENTATION
FLUIDES CRISTALLINS LIQUIDES ET ÉCRANS À BASE DE CRISTAUX LIQUIDES À ORIENTATION HOMÉOTROPE À STABILISATION POLYMÈRE

(30) Priorität: 15.07.2010 DE 102010027398
(43) Veröffentlichungstag der Anmeldung: 22.05.2013
(73) Patentinhaber: Merck Patent GmbH, 64293 Darmstadt (DE)
(72) Erfinder: ARCHETTI, Graziano, 64289 Darmstadt (DE); TAUGERBECK, Andreas, 64285 Darmstadt (DE); BENDER, Renate, 64291 Darmstadt (DE)
(86) Internationale Anmeldenummer: PCT/EP2011/003207
(87) Internationale Veröffentlichungsnummer: WO 2012/007107

(56) Entgegenhaltungen:
- US-A1- 2005 224 754
- US-A1- 2008 198 301
- US-B2- 6 861 107

## Beschreibung

Die vorliegende Erfindung betrifft flüssigkristalline Medien und dieses enthaltende Flüssigkristallanzeigen (FK-Anzeigen) mit polymerstabilisierter, homöotroper (vertikaler) Ausrichtung des flüssigkristallinen Mediums (FK-Mediums). Das erfindungsgemäße FK-Medium enthält Teilchen mit einer Masse von mindestens 450 Da, die durch eine polare, organische Ankergruppe funktionalisiert sind.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN-(Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).
Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

VA-Anzeigen sollen im Allgemeinen einen sehr hohen spezifischen Widerstand bei gleichzeitig großem Arbeitstemperaturbereich, kurze Schaltzeiten und niedriger Schwellenspannung, mit deren Hilfe verschiedene Graustufen erzeugt werden können, besitzen.

In den herkömmlichen VA-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der VA-Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen.

Der Nachteil der häufig verwendeten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet.

Eine Weiterentwicklung der VA-Displays stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. In diesen Anzeigen wird dem FK-Medium eine geringe Menge (zum Beispiel 0,3 Gew.%, typischerweise <1 Gew.%) einer oder mehrerer polymerisierbarer Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen.

Nachfolgend wir der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der'pretilt' positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C-Chien, Jpn. J. Appl. Phys. 43, 2004, 7643-7647 beschrieben. PSA-IPS-Anzeigen sind zum Beispiel in US 6,177,972 und Appl. Phys. Lett. 1999, 75(21), 3264 beschrieben. PSA-TN-Anzeigen sind zum Beispiel in Optics Express 2004, 12(7), 1221 beschrieben.

PSA-Anzeigen können ebenso wie die oben beschriebenen konventionallen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. "thin film transistor" bzw. "TFT"), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-Anzeigen kann man ohne nennenswerte Einbußen sonstiger Parameter eine Verkürzung der Schaltzeiten erreichen, die mit einem in Testzellen messbaren 'pretilt' korrelieren.

Im Stand der Technik werden für PSA-VA beispielsweise polymerisierbare Verbindungen der folgenden Formel verwendet 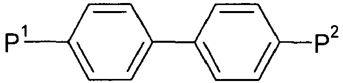 worin P eine polymerisierbare Gruppe, üblicherweise eine Acrylat- oder Methacrylatgruppe bedeutet, wie beispielsweise in US 7,169,449 beschrieben.

Die Schaltzeit einer VA-Anzeige hängt in hohem Maße von der Einstellung des 'pretilts' ab. Der Aufwand dafür, einschließlich Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Über eine spontane horizontale bis vertikale Ausrichtung einer Flüssigkristallschicht mit Hilfe von Nanopartikeln basierend auf polyhedralen oligomeren Silsesquioxanen (nachfolgend einfach Silsesquioxane, PSS) berichtet die Druckschrift Shie-Chang Jeng et al. Optics Letters (2009), 34, 455-457. Ab einer Konzentration von ca. 1 Gew.-% wird eine nahezu homöotrope Ausrichtung beobachtet. Der 'pretilt' ist nur durch die Konzentration beeinflussbar.

In der Druckschrift US 2008/0198301 A1 wird ebenfalls PSS als Orientierungsmaterial vorgeschlagen. Man erkennt, dass die Selbstorientierung auf ITO und auf planar orientierendem Polyimid funktioniert.

Die Druckschrift JP 2010170090 A offenbart ein Dendrimer als Zusatz zu Flüssigkristallmischungen, das ein vertikale Ausrichtung gegenüber Substraten bewirkt.

Shug-June Hwang et al. J. Phys D: Appl. Phys 2009, 42, 025102 offenbaren aminsubstituiertes POSS (1 %) zur vertikalen Ausrichtung einer dielektrisch negativen Flüssigkristallmischung.

In der Druckschrift US 2005/224754 A1 wird ein Silsesquioxan, das durch eine 3-Aminopropyl-Gruppe funktionalisiert ist, als Additiv für eine polymerisierbare Mischung für FK-Filme offenbart.

Auf das Problem der Temperaturabhängigkeit des Schaltvorgangs und der fehlenden Passivierungsschicht wird in diesen Druckschriften nicht hingewiesen. In der Tat hat es sich gezeigt, dass der Grad der von PSS induzierten homöotropen Orientierung mit steigender Temperatur rasch abnimmt. Eine Passivierungsschicht ist darüber hinaus besonders wichtig, da die Polyimidschicht nicht nur Orientierung der FK-Medium bietet sondern auch für elektrische Isolierung sorgt. Ohne Passivierungsschicht können Probleme mit der Zuverlässigkeit der Anzeige ('Reliability') wie R-DC ('Residual-DC') erscheinen.

Auf einem Konferenzposter zur SID 2010 (H.Y. Gim et al., P-128) wird beschrieben, dass ein phenethylsubstituiertes polyhedrales oligomeres Silsesquioxan in einer Konzentration von 10 Gew.-% in einer Anzeige ohne konventionelle Orientierungschicht vom PS-VA-Typ verwendet wird. Das FK-Medium wird durch das PSS homöotrop orientiert. Die große Menge an Dotierstoff beeinflusst aber erheblich die Eigenschaften des FK-Mediums, daher ist die Anzahl an einsetzbaren Flüssigkristallkomponenten für eine derartige FK-Anzeige sehr begrenzt.

Die bestehenden Ansätze um zu Displayanwendungen ohne Polyimidschicht zu gelangen sind daher noch nicht vollständig zufrieden stellend.

Ein Gegenstand der vorliegenden Erfindung ist ein FK-Medium enthaltend eine niedermolekulare flüssigkristalline Komponente mit einer negativen dielektrischen Anisotropie vom Wert Δε ≤ -1,5, eine polymerisierte oder polymerisierbare Komponente und eine Komponente (N) enthaltend Teilchen mit einer Masse von mindestens 450 Da, wobei die Teilchen eine oder mehrere organische polare Ankergruppen umfassen, wobei die Ankergruppen Gruppen mit Atomen ausgewählt aus N, O, S und P umfassen, und wobei die polymerisierte Komponente erhältlich ist durch Polymerisation einer polymerisierbaren Komponente.

Ein weiterer Gegenstand der vorliegende Erfindung ist eine Flüssigkristallanzeige (FK-Anzeige) enthaltend eine Flüssigkristallzelle (FK-Zelle) mit zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines Flüssigkristallmediums (FK-Mediums) enthaltend eine niedermolekulare flüssigkristalline Komponente mit einer negativen dielektrischen Anisotropie vom Wert Δε ≤ -1,5, eine polymerisierte oder polymerisierbare Komponente und eine Komponente (N) wie vor und nachstehend definiert, die geeignet ist, eine homöotrope (vertikale) Ausrichtung des FK-Mediums gegenüber den Substratoberflächen herbeizuführen, wobei die polymerisierte Komponente erhältlich ist durch Polymerisation einer oder mehrerer polymerisierbarer Verbindungen zwischen den Substraten der FK-Zelle im FK-Medium, optional unter Anlegen einer elektrischen Spannung an die Elektroden der Zelle.

Ein weiterer Gegenstand der Erfindung ist ein Verfahren zu Herstellung einer FK-Anzeige, vorzugsweise des PSA-VA-Typs, enthaltend eine FK-Zelle mit zwei Substraten und zwei Elektroden, wobei mindestens ein Substrat lichtdurchlässig ist und mindestens ein Substrat eine oder zwei Elektroden aufweist, umfassend die Verfahrensschritte:
- Befüllen der Zelle mit einem LC-Medium enthaltend ein FK-Medium wie vor und nachstehend oder in den Ansprüchen beschrieben, umfassend eine polymerisierbare Komponente und eine Komponente (N), die geeignet ist, eine homöotrope (vertikale) Ausrichtung des FK-Mediums gegenüber den Substratoberflächen herbeizuführen, und
- Polymerisieren der polymerisierbaren Komponente, optional unter Anlegen einer Spannung an die Elektroden der Zelle oder unter der Wirkung eines elektrischen Feldes.

Die Komponente (N) wird im Flüssigkristall gelöst oder dispergiert. Sie bewirkt eine homöotrope Ausrichtung des Flüssigkristalls gegenüber den Substratoberflächen. Sie umfasst Teilchen mit einer Masse von mindestens 450 Da, wobei die Teilchen eine oder mehrere organische polare Ankergruppen umfassen, bevorzugt mit einem Anteil von 50, 75, 90 Gew.-% oder mehr, besonders bevorzugt besteht die Komponente (N) vollständig aus solchen Teilchen. Die Masse der Teilchen beträgt bevorzugt 600 Da oder mehr, und 2000 Da oder weniger. Die Komponente (N) sollte chemisch inert, alterungsbeständig und bevorzugt lipophil sein, um im Kontakt mit FK-Medien kompatibel und löslich oder dispergierbar zu sein. Geeignete Teilchen der Komponente (N) sind beispielsweise Silsesquioxanverbindungen mit einer polaren Ankergruppe, die sowohl als chemische Verbindungen als auch als Nanopartikel von ca. 1-5 nm Größe aufgefasst werden können. Alternativ kommen hier auch andere große Molekülreste als Teilchen zum Einsatz, die eine molekular definierte Struktur besitzen, und eine polare, organische Ankergruppe aufweisen. Beispiele für solche Reste sind z.B. funktionalisierte Fullerene, Varianten der Silsesquioxane, tetrasubstituierte Methanderivate und andere dreidimensionale molekulare Gerüste mit einer wie oben definierten Masse. Grundsätzlich können die Teilchen organische Moleküle sein oder organisch/anorganische Hybrid-Teilchen. Der anorganische Teil kann eine molekular definierte Struktur (z.B. PSS) aufweisen, oder eine Ansammlung von Atomen mit geringerer Ordnung sein (Cluster, Metallnanopartikel, Nanokristalle, etc.).

Die Teilchen der Komponente (N) besitzen einen Durchmesser größer oder gleich 1 nm, vorzugsweise einen Durchmesser von 1 bis 5 nm. Es ist bevorzugt, dass die Teilchen der Komponente (N) ein Seitenverhältnis dₘₐₓ/dₘᵢₙ von höchstens 3:1, bevorzugt 2:1, besitzen. Dabei bezeichnet dₘₐₓ die maximale Längenausdehnung und dₘᵢₙ die minimale Längenausdehnung eines nichtspärischen Teilchens. Bei stäbchenförmigen Teilchen bezeichnet dₘₐₓ die Länge, und dₘᵢₙ die Breite bzw. den geringsten Durchmesser. Bei plättchenförmigen Teilchen bezeichnet dₘₐₓ den Durchmesser und dₘᵢₙ die Dicke. Die größte Längenausdehnung sollte bevorzugt 1 nm oder mehr betragen, bevorzugt sind 1-5 nm. Für Teilchen, deren Struktur nicht vollständig beschrieben werden kann, wird der mittlere Durchmesser verwendet in der Annahme, dass das Teilchen annähernd sphärisch ist. In diesem Fall ist der mittlere Durchmesser anstelle der größten Längenausdehnung anzusetzen. Gleiches gilt für statistische Größenverteilungen. Die Größenverhältnisse molekularer Strukturen lassen sich mit Hilfe von einfachen Modellen oder Berechungen der Molekülstruktur abschätzen, indem man gängige Bindungswinkel, Bindungslängen und Van-der-Waals-Radien der beteiligten Atome annimmt. Die Größe und Form von anderen nanopartikulären Stoffen lassen sich durch Streuungsmethoden in Lösung oder Transmissionselektronenmikroskopie (TEM) bestimmen.

Die Teilchen der Komponente (N) werden vorzugsweise in einer Konzentration von weniger als 10 Gew.-%, besonders bevorzugt ≤ 8 Gew.- % und ganz besonders ≤ 5 Gew.-% eingesetzt. Sie werden bevorzugt in einer Konzentration von mindestens 0,1 Gew.-% eingesetzt, bevorzugt mindestens 0,2 Gew.-%. Der Einsatz von 0,1 bis 0,5 Gew.-% der Komponente (N) führt in der Regel schon zu vollständig homöotroper Orientierung der FK-Schicht bei den üblichen Zelldicken (3 bis 4 µm).

Die Ankergruppe der Komponente (N) besteht bevorzugt aus einer Gruppe, die eine nicht-kovalente Wechselwirkung mit der Substratoberfläche aus Glas oder Metalloxiden eingeht. Geeignete Gruppen sind polare Gruppen umfassend Gruppen mit Atomen ausgewählt aus N, O, S, und P, die gleichzeitig ausreichend stabil sind. Bevorzugt sind ein oder mehrere, bevorzugt zwei oder mehr, dieser Heteroatome in der Ankergruppe enthalten.

Die Ankergruppe besteht besonders bevorzugt aus wenigstens zwei Strukturelementen enthaltend Heteroatome ausgewählt aus (N, O), und kovalenten, verknüpfenden Strukturen zwischen den Heteroatomen und zwischen einem oder mehreren der Heteroatome und dem Rest des Teilchens (das Teilchen ohne die Ankergruppe). Diese kovalenten Strukturen bestehen aus kettenförmigen oder cyclischen aliphatischen Resten und/oder aromatischen Ringen, bevorzugt aus gesättigten Kohlenwasserstoffketten und/oder aliphatischen Ringen. Aliphatische Ringe umfassen z.B. Cyclohexan und Cyclopentan. Aromatische Ringe umfassen vorzugsweise Benzol, z.B. 1,4-, 1,3- oder 1,2-Phenylen.

Geeignete Ankergruppen umfassen neben einem Kohlenwasserstoffgerüst als Heteroatome N und O, beispielsweise Strukturelemente wie -NH₂, -NH-(sekundäres Amin), tert-N (tertiäres Amin), =N-, -OH, -SH, -CN, -(CO)-, -O-, -S- und bevorzugt Kombinationen aus zwei oder mehreren. Bevorzugt sind außerdem Gruppen, die mit den FK-Displays und dem FK-Medium kompatibel sind. Davon ausgeschlossen sind in der Regel saure Gruppen wie -(CO)OH, -S(O)₂OH, -P(O)(OH)₂, etc., sowie ionische Gruppen. Eine bevorzugte Komponente (N) ist dadurch gekennzeichnet, dass die Verbindungen oder Partikel der Komponente (N) durch einen Anker umfassend mindestens eine, zwei oder mehr primäre oder sekundäre Amin-Funktionen (tert-N, -NH-, -NH₂), Ether-Gruppen (-O-) oder Hydroxygruppen (-OH) funktionalisiert ist. Bevorzugt sind es zwei oder mehr dieser Funktionen in einer Ankergruppe. Bevorzugt sind dabei zwei Heterofunktionen so zueinander angeordnet, dass sie eine Wechselwirkung mit einem Atom eines Bindungspartners nach Art eines zwei- oder mehrzähnigen Chelat-Liganden aufnehmen können. In einem einfachen, beispielhaften Fall entspricht die Art und Stellung der Aminofunktionen denen eines Ethylendiamins (-NH-CH₂CH₂-NH₂).

Teilchen der Komponente (N) haben in einer bevorzugten Ausführungsform die allgemeine Formel
O-A*
worin
A*die polare Ankergruppe bedeutet, und
O für das restliche Teilchen ohne die Ankergruppe steht. Das restliche Teilchen O bestimmt im Wesentlichen die Größe des Teilchens und in der Regel den Hauptanteil der Masse.

Die Ankergruppe A* bedeutet bevorzugt eine Gruppe der Formel

-Sp-[X²-Z²-]ₖX¹ (A1)

worin
- Sp: eine Einfachbindung oder eine Abstandsgruppe wie Sp^{a} wie nachstehend für Formel II definiert, bevorzugt eine
Abstandsgruppe Sp"-X" wie für Formel II unten definiert, die über die Gruppe X" mit dem Teilchen verbunden ist, wobei Sp" ganz besonders eine Einfachbindung oder ein Alkylen mit 1 bis 12 C-Atomen bedeutet,
- X¹: eine Gruppe -NH₂, -NHR¹ -NR¹₂, -CN, -OR¹ oder -OH, -(CO)OH, oder eine Gruppe der Formeln 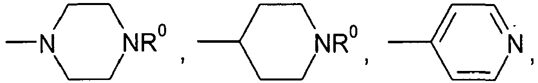 oder 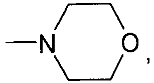
- R⁰: H oder Alkyl mit 1 bis 12 C-Atomen,
- X²: jeweils unabhängig -NH-, -NR¹-, -O- oder eine Einfachbindung
- Z²: jeweils unabhängig eine Alkylengruppe mit 1-15 C-Atomen, carbocyclische Ringe mit 5 oder 6 C-Atomen (z.B. optional substituiertes Benzol, Cyclohexan), oder Kombinationen aus einem oder mehreren Ringen und Alkylengruppen, worin jeweils ein oder mehrere Wasserstoffatome durch -OH, OR¹, -NH₂, -NHR¹-, -NR¹₂, oder Halogen (bevorzugt F, Cl) ersetzt sein können.
- R¹: jeweils unabhängig einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind, und und wobei die Gruppen R¹ miteinander zu Ringsystemen verknüpft sein können,
- k: 0 bis 3
bedeutet. Im Speziellen besteht die Ankergruppe aus diesem Rest und bedeutet A*.

Besonders bevorzugt umfasst die Ankergruppe der Komponente (N) einen (N/O)-heteroatomhaltigen Rest der Teilformel (A2) 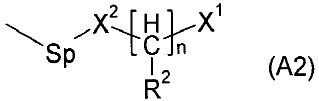 worin Sp, X¹, X², R¹ und R² wie oben für Formel (A1) definiert sind, und
- n: 1, 2 oder 3,
bedeutet. Im Speziellen besteht die Ankergruppe aus diesem Rest und bedeutet A*.

Besonders bevorzugte stickstoffhaltige Ankergruppen A* sind ausgewählt aus
-NH₂, -NH-(CH₂)ₙ₃H, -(CH₂)ₙ-NH₂, -(CH₂)ₙ-NH-(CH₂)ₙ₃H, -NH-(CH₂)ₙ-NH₂, -NH-(CH₂)ₙ-NH-(CH₂)ₙ₃H, -(CH₂)ₙ₁-NH-(CH₂)ₙ₂-NH₂, -(CH₂)ₙ₁-NH-(CH₂)ₙ₂-NH-(CH₂)ₙ₃H, -O-(CH₂)ₙ-NH2, -(CH₂)ₙ₁-O-(CH₂)ₙ-NH₂, -(CH₂)ₙ₁-NH-(CH₂)ₙ₂-OH, -O-(CH₂)ₙ₁-NH-(CH₂)ₙ₂-NH₂, -O-(CH₂)ₙ₁-NH-(CH₂)ₙ₂-OH) -(CH₂)ₙ₁-NH-(CH₂)ₙ₂-NH-(CH₂)ₙ₃H,
worin n, n1, n2 und n3 unabhängig 1, 2, 3, 4, 5, 6, 7, 8, 9, 10, 11 oder 12, insbesondere 1, 2, 3 oder 4 bedeuten. Die mehrfach mit Heteroatomen (N, O) ausgestatteten Gruppen besitzen eine besondere Stärke als Ankergruppe. Sie können in kleineren Konzentrationen eingesetzt werden.

Besonders bevorzugte stickstofffreie Ankergruppen A* sind ausgewählt aus -OH, -(CH₂)ₙ-OH, -O-(CH₂)ₙ-OH, -[O-(CH₂)ₙ₁-]ₙ₂-OH, -(CO)OH, -(CH₂)ₙ-(CO)OH, -O-(CH₂)ₙ-(CO)OH oder -[O-(CH₂)ₙ₁-]ₙ₂-(CO)OH,
worin n, n1 und n2 unabhängig 1, 2, 3, 4, 5, 6, 7, 8, 9, 10, 11 oder 12, insbesondere 1, 2, 3 oder 4 bedeuten. Diese sind sehr gut kompatibel mit flüssigkristallinen Medien.

Die verwendeten Teilchen können untereinander gleich oder verschieden sein. Sie können sich entweder durch die molekulare Struktur unterscheiden oder durch eine statistische Massenverteilung eines Nanopartikels oder durch Isotopenverteilungen.

In der Regel besitzt ein Teilchen genau eine Ankergruppe. Mehrere Ankergruppen sind jedoch nicht ausgeschlossen. Bei Teilchen, die durch nachfolgende oder vorausgehende Polymerisation zusammenhängen, entstehen übergeordnete Teilchen, die mehrere Ankergruppen aufweisen. Beispiele dieser Art sind Dimere oder Oligomere von polyhedralen Silsesquioxanen, die an jeder PSS-Einheit durch eine Ankergruppe funktionalisiert sind. Der Zusammenschluss von mehreren PSS-Kernen erfolgt über die an die Ecken gebundenen organischen Reste. Der PSS-Kern kann auch aufgebrochen sein und selbst mehrere OH-Gruppen als Anker aufweisen (vgl. PSS-7 unten). Bevorzugte Teilchen der Komponente (N) besitzen ein polare Ankergruppe, sind aber an der Oberfläche des Teilchens durch Kohlenwasserstoffreste, bevorzugt durch unfunktionalisierte aliphatische Reste passiviert.

Bevorzugte Teilchen, die Silsesquioxane sind, haben die allgemeine Struktur PSS-0: 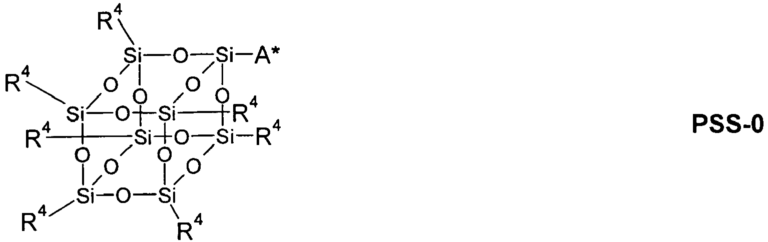 worin
- A*: eine Ankergruppe, wie vor- und nachstehend beschrieben, und
- R⁴: jeweils unabhängig einen optional halogenierten Kohlenwasserstoffrest, bevorzugt einen unfunktionalisierten oder halogenierten aliphatischen Rest, einen aromatischen Rest (insbesondere Benzolrest) oder Kombinationen davon, besonders bevorzugt einen Alkylrest oder einen Alkenylrest mit jeweils bis zu 15 C-Atomen, der optional durch Phenyl und/oder Halogen ein oder mehrfach substituiert ist,
bedeuten.

Besonders bevorzugte Teilchen als Komponente (N) sind ausgewählt aus den folgenden beispielhaften Verbindungen, welche bevorzugte Substituenten illustrieren:

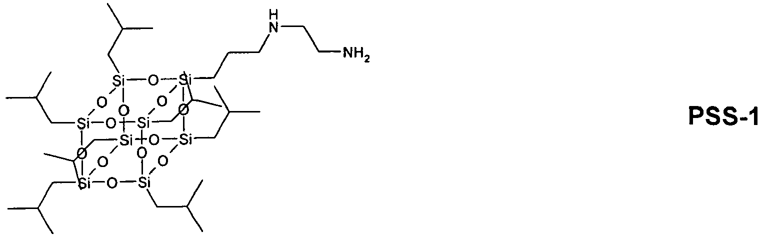

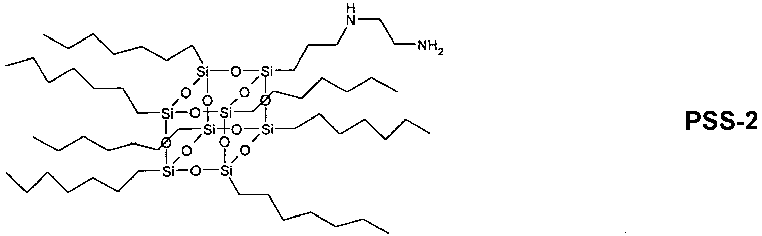

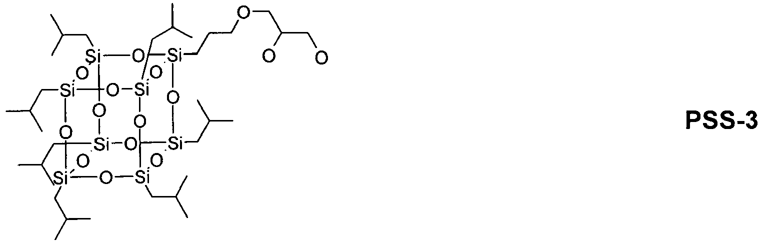

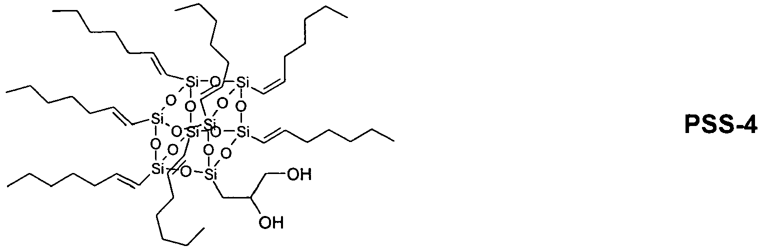

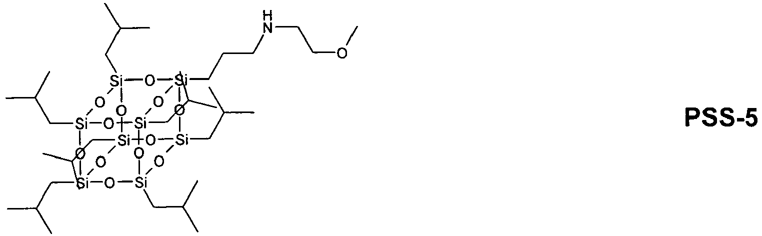

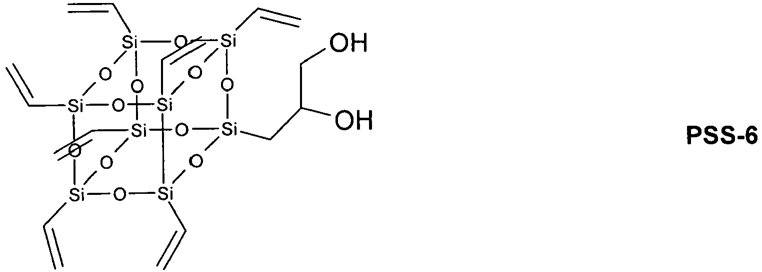

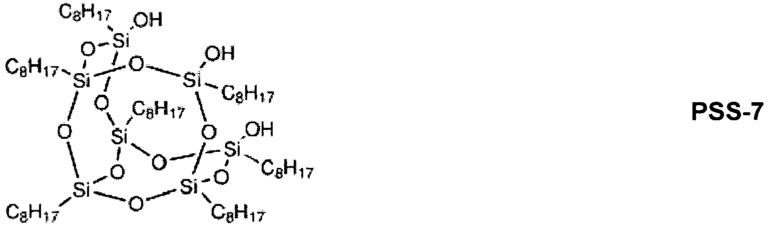

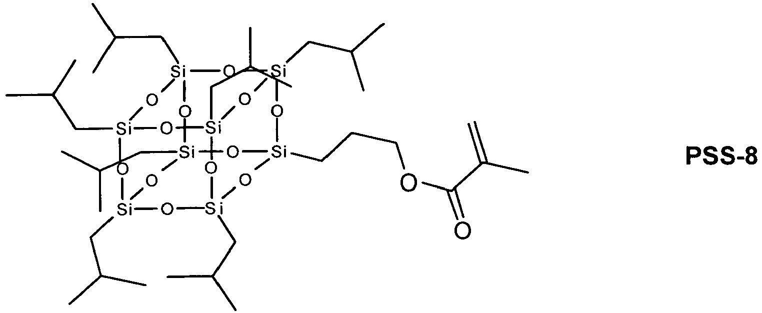

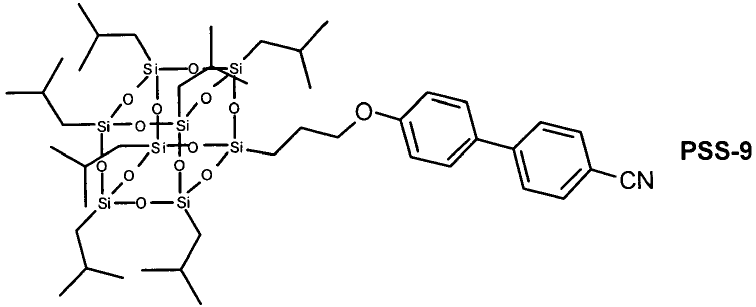

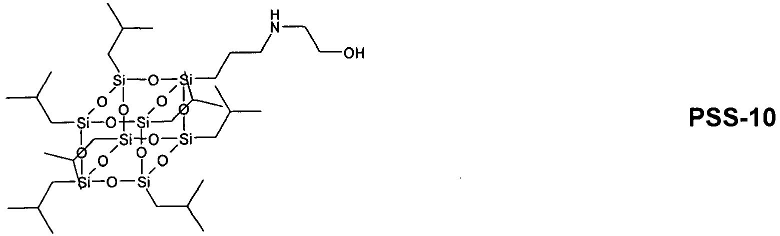

In einer weiteren bevorzugten Ausführungsform der Erfindung werden als Komponente (N) Teilchen verwendet, die als weitere Funktionalisierung neben dem polaren Anker eine oder mehrere polymerisierbare Gruppen aufweisen (vergleiche Gruppe P^{a} oder P^{b} unten). Bevorzugte polymerisierbare Gruppen sind Gruppen wie Acrylat-, Methacrylat-, Fluoracrylat-, Oxetan-, Vinyloxy- oder Epoxygruppe, besonders bevorzugt Acrylat und Methacrylat. Durch den Einschluss der Komponente (N) in die Polymerisation werden die Nanopartikel nachhaltig immobilisiert, wodurch sie ihre Funktion beibehalten.

Ein Vorteil der erfindungsgemäßen FK-Anzeigen ist, dass die Anzeige ohne die übliche Polyimid-Orientierungsschicht die gewünschte homöotrope Orientierung erreicht. Durch die Polymerstabilisierung bleibt diese Orientierung auch bei höheren Temperaturen erhalten. Dadurch wird eine verbesserte Temperaturstabilität des elektrooptischen Schaltens erreicht. Die erfindungsgemäßen Anzeigen zeichnen sich durch verbesserte Schaltzeiten und besseres Kontrastverhältnis (Pretiltwinkel und Temperaturabhängigkeit des Kontrasts) aus. Die polymerisierte Komponente kann gleichzeitig als eine Passivierungsschicht dienen, die die Zuverlässigkeit (die sog. 'reliability') des Displays erhöht. Die kleine Menge an Komponente (N) beeinflusst die Eigenschaften der FK-Medien praktisch unerheblich, daher kann eine breite Vielfalt an Flüssigkristall-Komponenten in der FK-Anzeige verwendet werden.

Die erfindungsgemäßen FK-Anzeigen besitzen daher bevorzugt keine Orientierungsschicht ('alignment layer') für homöotrope Ausrichtung auf den Oberflächen der FK-Zelle.

Die erfindungsgemäßen FK-Anzeigen verwenden ein FK-Medium mit negativer dielektrischer Anisotropie (Δε < -1,5). In der Regel handelt es sich dabei um eine VA-Anzeige mit auf gegenüberliegenden Seiten der FK-Zelle angeordneten Elektroden.

Die FK-Anzeigen sind in der üblichen Art und Weise mit Polarisator(en) versehen, die den Schaltvorgang des FK-Mediums sichtbar machen.

Die polymerisierte Komponente der FK-Zelle (Polymer) ist erhältlich durch Polymerisieren einer polymerisierbaren Komponente (Monomere). In der Regel sind die Monomere zunächst in dem FK-Medium gelöst und werden in der FK-Zelle polymerisiert nachdem sich eine homöotrope Ausrichtung oder ein hoher Tiltwinkel des FK-Medium eingestellt hat. Zur Unterstützung der gewünschten Ausrichtung kann eine Spannung an die FK-Zelle angelegt werden. Im einfachsten Fall erübrigt sich eine solche Spannung und die gewünschte Ausrichtung stellt sich allein durch die Beschaffenheit des Medium und der Zellgeometrie ein.

Die geeigneten Monomere (polymerisierbare Komponente) des FK-Medium sind solche aus dem Stand der Technik, die für PSA-VA- Anzeigen verwendet werden, insbesondere polymerisierbaren Verbindungen der unten genannten Formel II und/oder der Formeln M1 bis M22. Die erfindungsgemäßen FK-Medien zur Verwendung in PSA-Anzeigen enthalten vorzugsweise < 5 Gew.-%, besonders bevorzugt < 1 Gew.-% und ganz besonders bevorzugt < 0.5 Gew.-% an polymerisierbaren Verbindungen, insbesondere polymerisierbaren Verbindungen der unten genannten Formeln. Um einen ausreichenden Effekt zu erreichen werden bevorzugt 0,2 Gew.-% oder mehr eingesetzt. Die optimale Menge ist abhängig von der Schichtdicke.

Geeignete Monomere der polymerisierbaren Komponente des FK-Mediums werden durch die folgende Formel II beschrieben:

P^{a}-(Sp^{a})ₛ₁-A²-(Z¹-A¹)ₙ-(Sp^{b})ₛ₂-P^{b} II

worin die einzelnen Reste folgende Bedeutung besitzen:
- P^{a}, P^{b}: jeweils unabhängig voneinander eine polymerisierbare Gruppe,
- Sp^{a}, Sp^{b}: bei jedem Auftreten gleich oder verschieden eine Abstandsgruppe,
- s1, s2: jeweils unabhängig voneinander 0 oder 1,
- A¹, A²,: jeweils unabhängig voneinander einen Rest ausgewählt aus folgenden Gruppen
- a): der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F ersetzt sein können,
- b): der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
- c): der Gruppe bestehend aus Tetrahydropyran-2,5-diyl, 1,3-Dioxan-2,5-diyl, Tetrahydrofuran-2,5-diyl, Cylcobut-1,3-diyl, Piperidin-1,4-diyl, Thiophen-2,5-diyl und Selenophen-2,5-diyl, welche auch ein oder mehrfach durch L substituiert sein können,
- d): der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 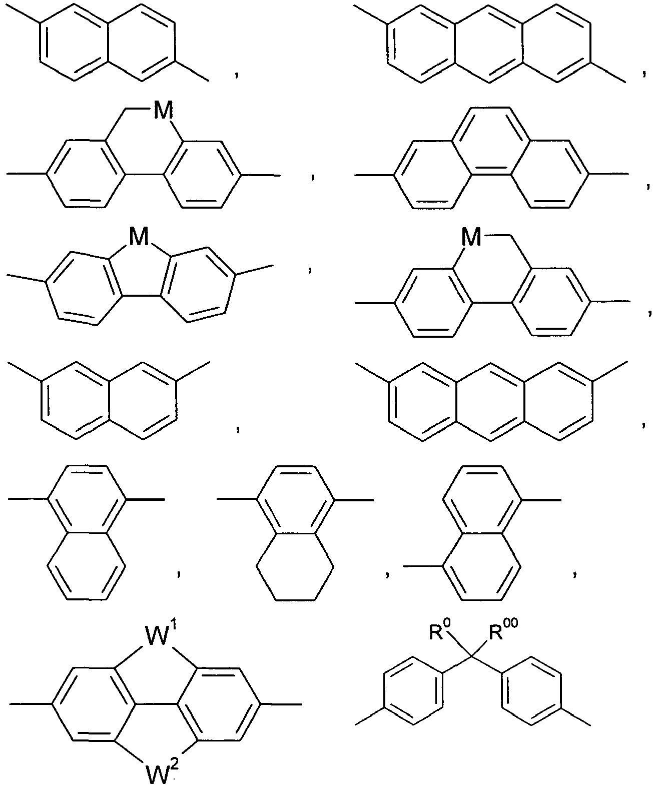 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
- n: 0, 1, 2 oder 3
- Z¹: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{y}R^{z})-, -CH₂CF₂-, -CF₂CF₂-, oder eine Einfachbindung,
- L: bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
- R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
- M: -O-, -S-, -CH₂-, -CHY¹- oder -CY¹Y²-, und
- Y¹, und Y²: jeweils unabhängig voneinander eine der oben für R⁰ angegebenen Bedeutungen, Cl oder CN, und vorzugsweise H, F, Cl, CN, OCF₃ oder CF₃.
- W¹, W²: jeweils unabhängig voneinander -CH₂CH₂-, -CH=CH-, -CH₂-O-, -O-CH₂-, -C(R^{c}R^{d})- oder -O- bedeuten,
- R^{c} und R^{d}: jeweils unabhängig voneinander H oder Alkyl mit 1 bis 6 C-Atomen, vorzugsweise H, Methyl oder Ethyl, bedeuten,

Die polymerisierbare Gruppe P^{a,b} ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P^{a,b} sind ausgewählt aus der Gruppe bestehend aus CH₂=CW¹-CO-O-, CH₂=CW¹-CO-, 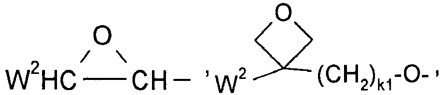 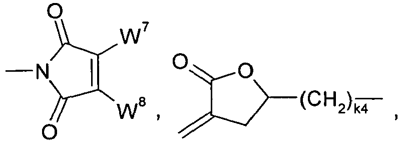 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁- Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P^{a,b} sind ausgewählt aus der Gruppe bestehend aus CH₂=CW¹-CO-O-, CH₂=CW¹-CO-,

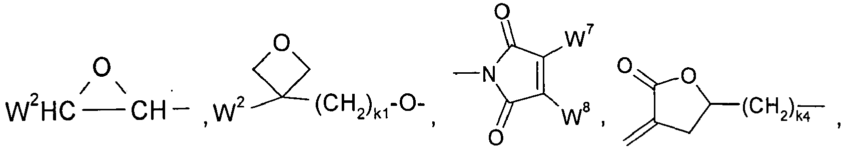

CH₂=CW²-O-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=C_{H}-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P^{a,b} sind sind ausgewählt aus der Gruppe bestehend aus CH₂=CW¹-CO-O-, insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-, 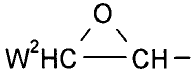 und

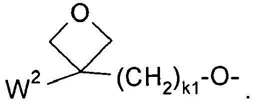

Ganz besonders bevorzugte Gruppen P^{a,b} sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen bevorzugt eine Acrylat- oder Methacrylatgruppe.

Bevorzugte Abstandsgruppen Sp^{a,b} sind ausgewählt aus der Formel Sp"-X", so dass der Rest P^{a/b}-Sp^{a/b} - der Formel P^{a/b}-Sp"-X"- entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -N(R⁰)-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C≡C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C=C-, -CH=CH-CO-O-, -O-CO-CH=CH- oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.

X' ist vorzugsweise -O-, -S -CO-, -COO-, -OCO-, -O-COO-, -CO-NR⁰-, -NR⁰-CO-, -NR⁰-CO-NR⁰- oder eine Einfachbindung.

Typische Abstandsgruppen Sp" sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Besonders bevorzugte Monomere sind die folgenden: 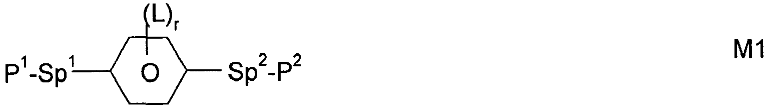 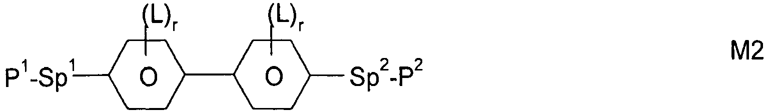 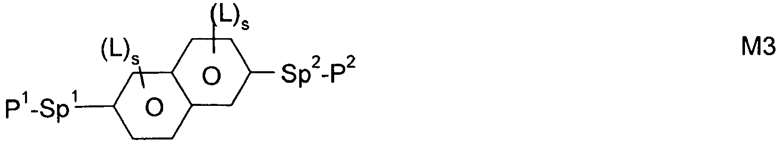 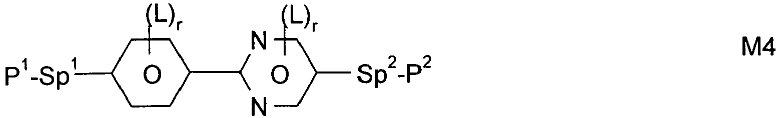 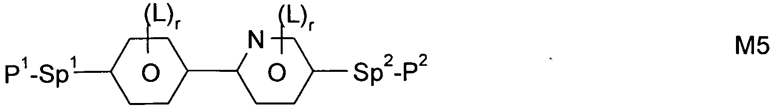 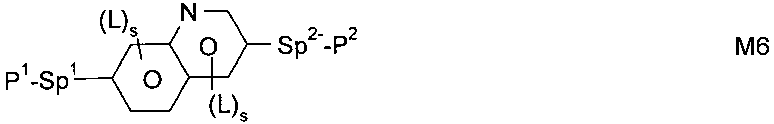 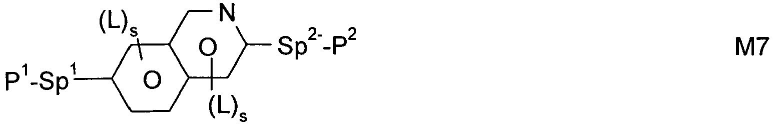 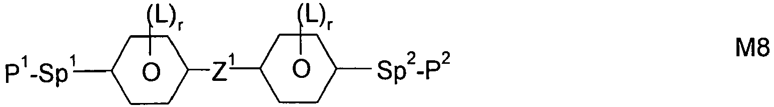 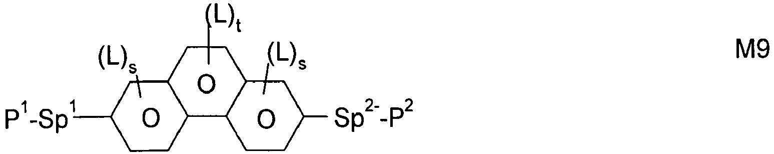 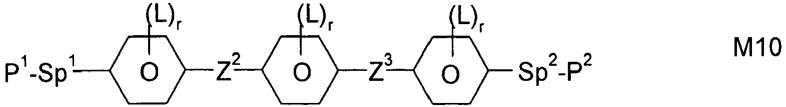 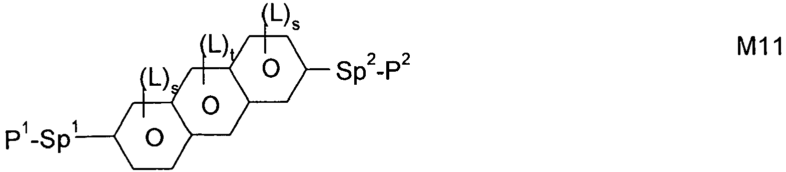 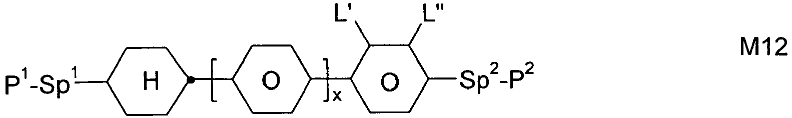 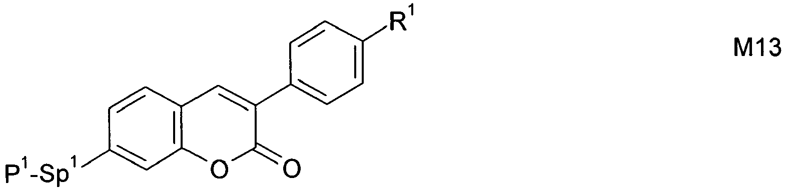 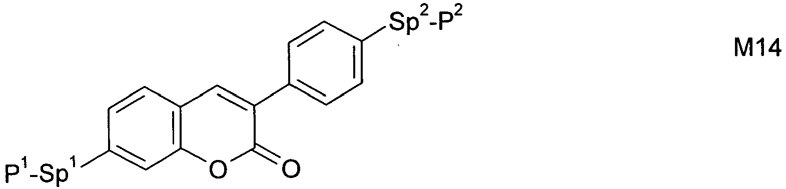 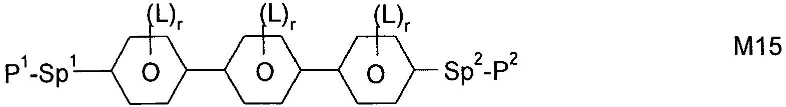 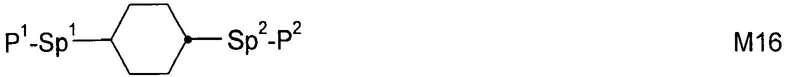 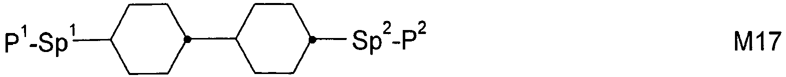 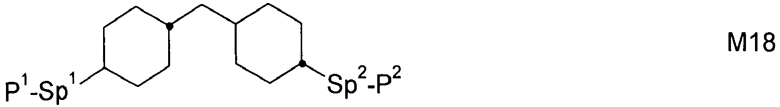 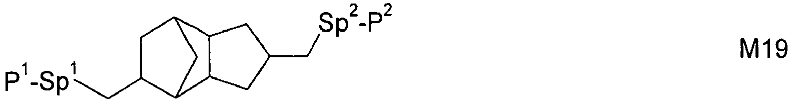 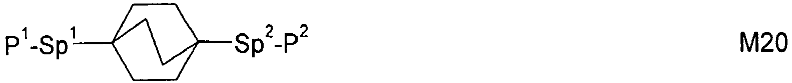 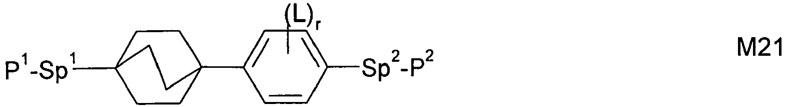 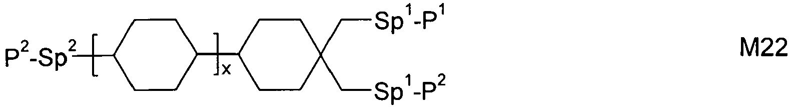 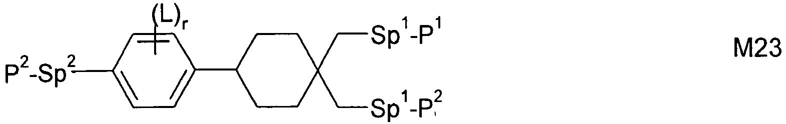 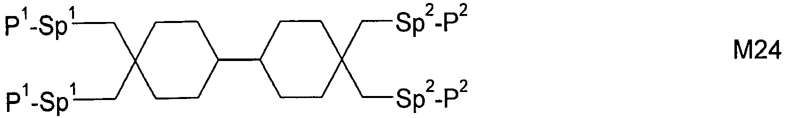 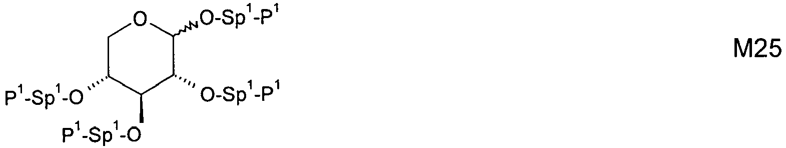 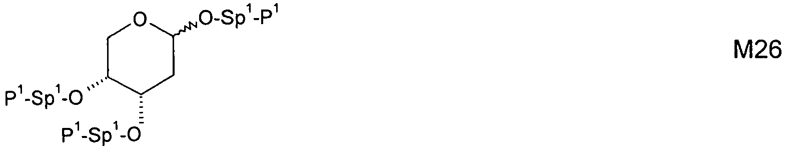 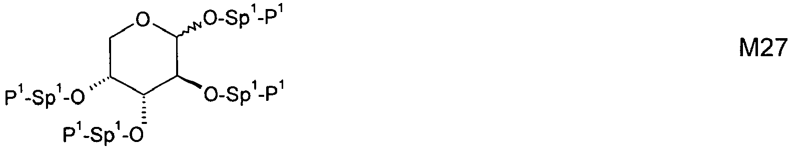 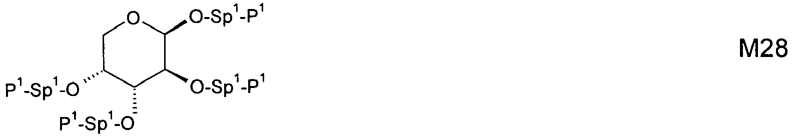 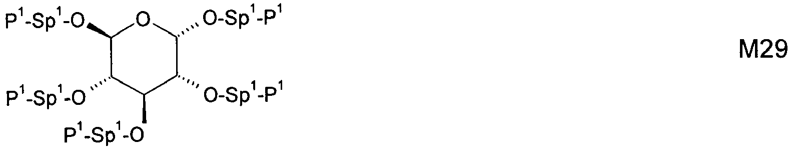 worin die einzelnen Reste folgende Bedeutung besitzen:
- P¹ und P²: jeweils unabhängig voneinander eine polymerisierbare Gruppe wie für Formel II definiert, bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O-oder -(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt,
wobei auch einer oder mehrere der Reste P¹-Sp¹- und P²-Sp²-einen Rest R^{aa} bedeuten können, mit der Maßgabe dass mindestens einer der vorhandenen Reste P¹-Sp¹- und P²-Sp²- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Vorzugsweise enthält das FK-Medium oder die polymerisierbare Komponente eine oder mehrere Verbindungen ausgewählt aus der Gruppe der Formeln M1-M21, besonders bevorzugt aus der Gruppe der Formeln M2-M9, und ganz besonders bevorzugt aus der Gruppe der Formeln M2, M16, M17 und M18.

Vorzugsweise enthält das FK-Medium oder die polymerisierbare Komponente keine Verbindungen der Formel M10, worin Z² und Z³ -(CO)O- oder -O(CO)- bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymeriserbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die erfindungsgemäßen polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte. Die Polymerisation kann somit auch ohne Zusatz eines Initiators erfolgen. Somit enthält das FK-Medium in einer bevorzugten Ausführungsform keinen Polymerisationsinitiator.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen polymerisierbaren Verbindungen und der Komponente (N) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- Anzeigen geeignete dielektrisch negative FK-Mischung.

Geeignete FK-Mischungen sind dem Fachmann bekannt und in der Literatur beschrieben. FK-Medien für VA-Anzeigen sind in EP 1 378 557 A1 1 beschrieben.

Im Folgenden werden bevorzugte Ausführungsformen für das erfindungsgemäße flüssigkristalline Medium angeführt:
a) FK-Medium, welches zusätzlich eine oder mehrere Verbindungen ausgewählt aus der Gruppe der Verbindungen der Formeln IIIA, IIIB und IIIC enthält, 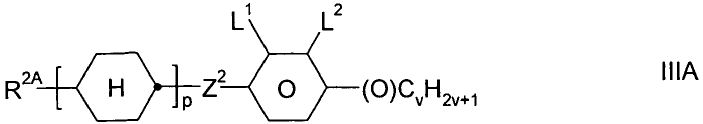 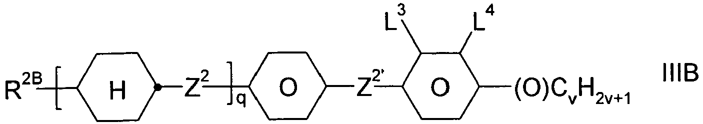 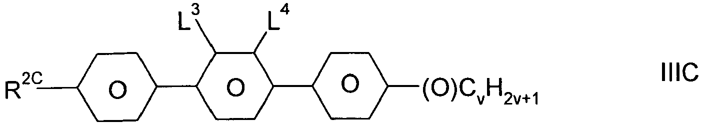 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 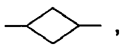 -C≡C-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: 1 oder 2,
   - q: 0 oder 1, und
   - v: 1 bis 6
   bedeuten.

In den Verbindungen der Formeln IIIA und IIIB können Z² gleiche oder unterschiedliche Bedeutungen haben. In den Verbindungen der Formel IIIB können Z² und Z^{2'} gleiche oder verschiedene Bedeutungen aufweisen.
In den Verbindungen der Formeln IIIA, IIIB und IIIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln IIIA und IIIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIIA und IIIB vorzugsweise jeweils unabhängig voneinander eine Einfachbindung, ferner eine -C₂H₄- Brücke.

Sofern in der Formel IIIB Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln IIIA und IIIB bedeutet (O)CᵥH₂ᵥ₊₁ vorzugsweise OCᵥH₂ᵥ₊₁, ferner CᵥH₂ᵥ₊₁. In den Verbindungen der Formel IIIC bedeutet (O)CᵥH₂ᵥ₊₁ vorzugsweise CᵥH₂ᵥ₊₁. In den Verbindungen der Formel IIIC bedeuten L³ und L⁴ vorzugsweise jeweils F.

Bevorzugte Verbindungen der Formeln IIIA, IIIB und IIIC werden nachfolgend genannt: 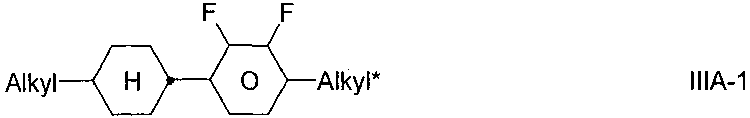 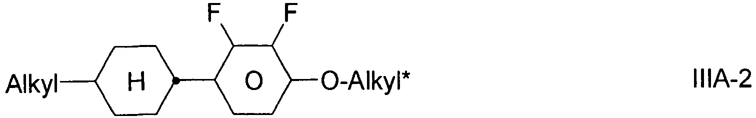 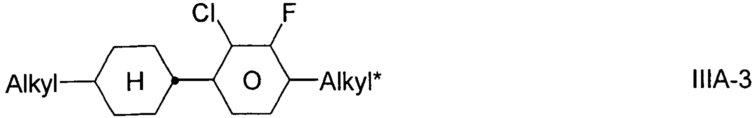 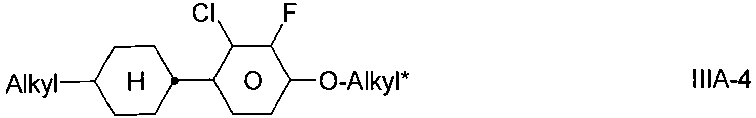 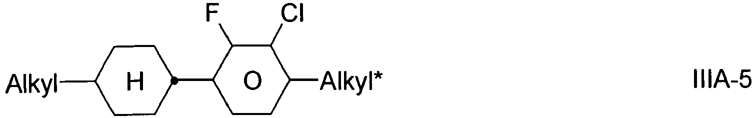 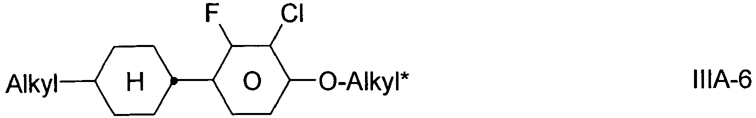 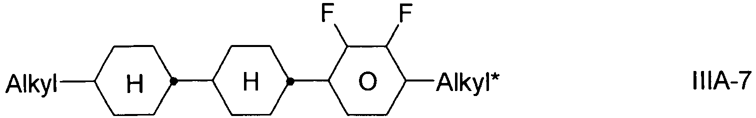 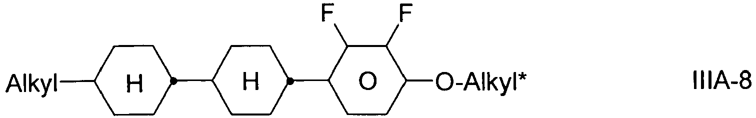 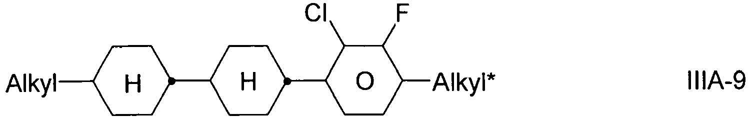 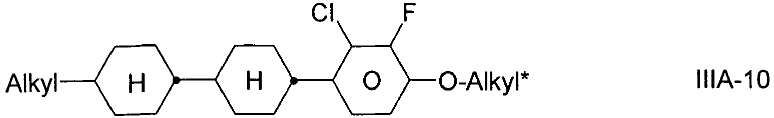 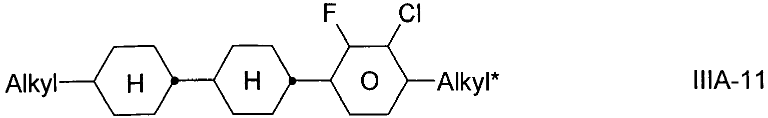 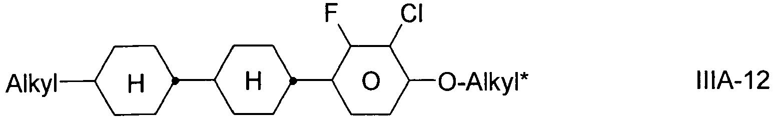 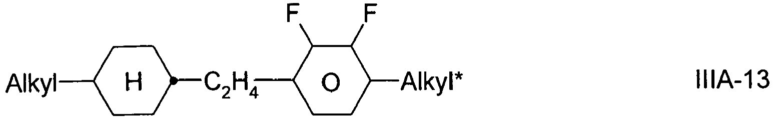 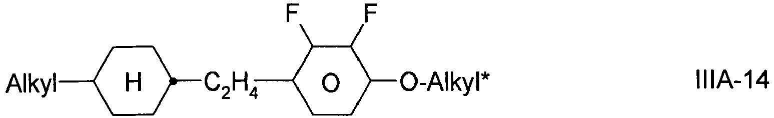 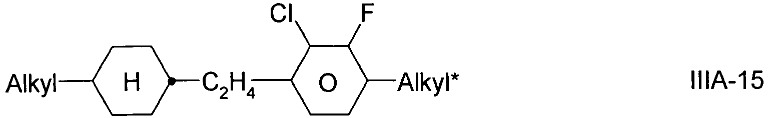 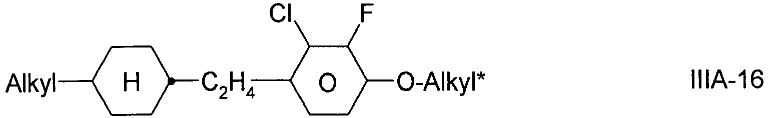 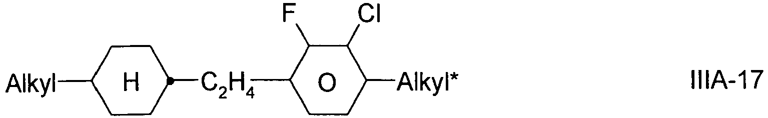 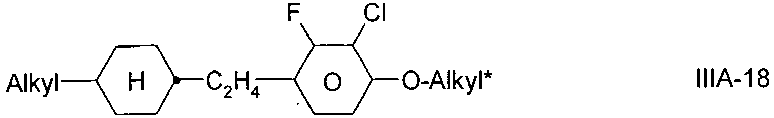 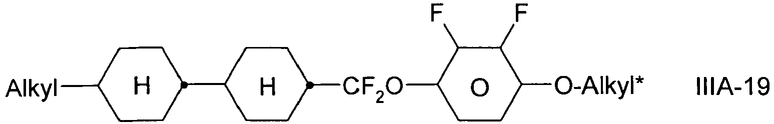 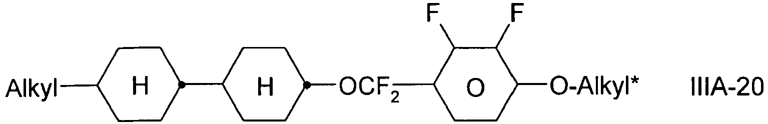 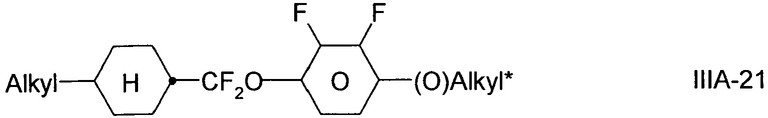 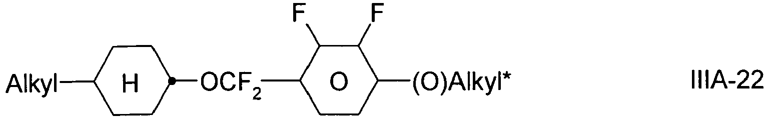 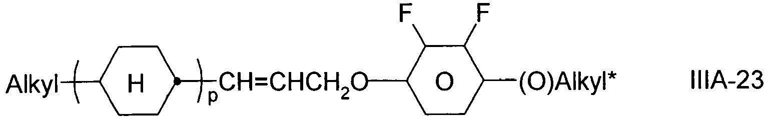 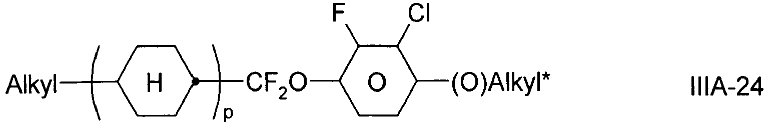 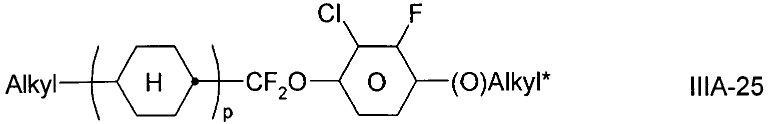 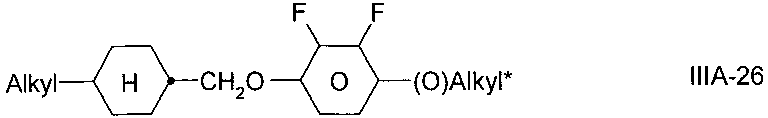 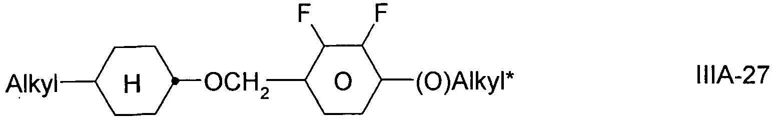 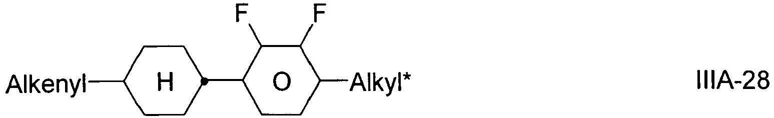 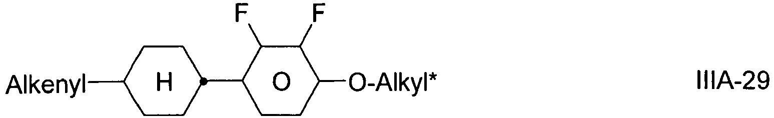 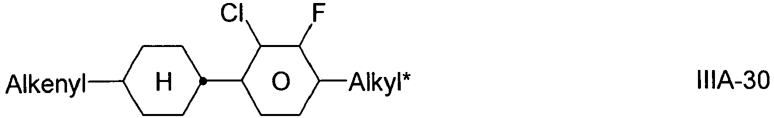 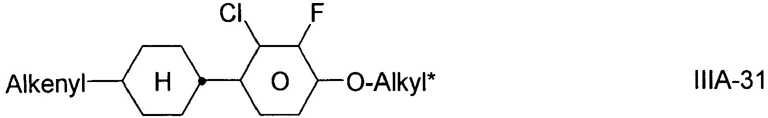 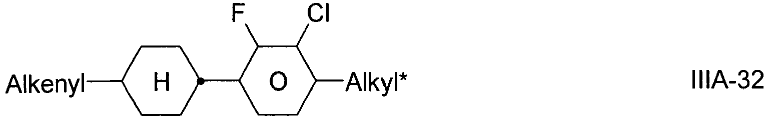 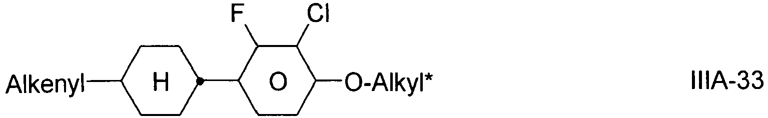 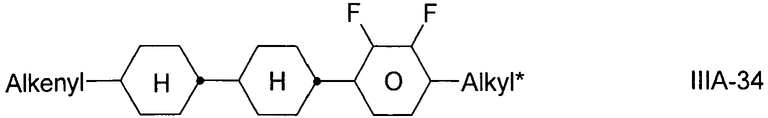 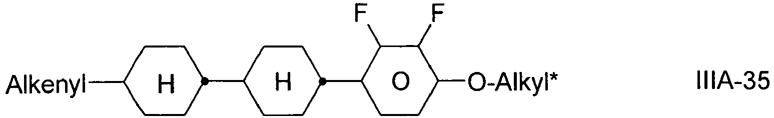 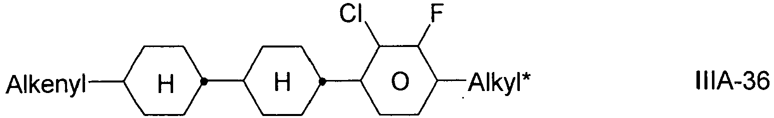 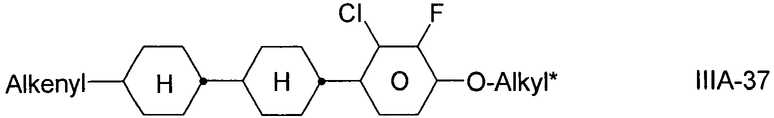 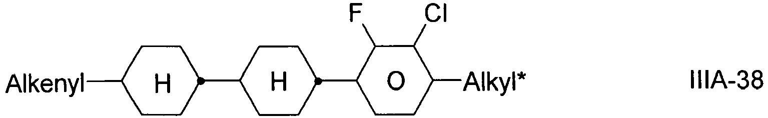 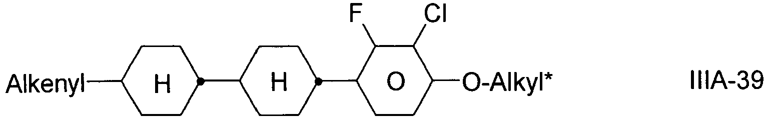 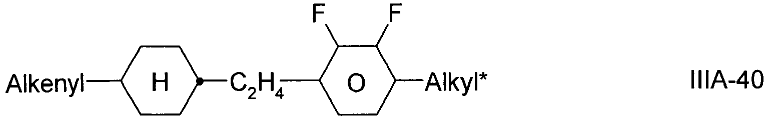 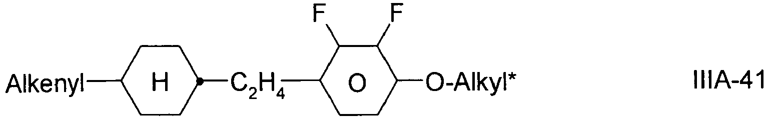 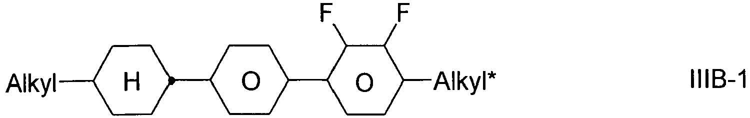 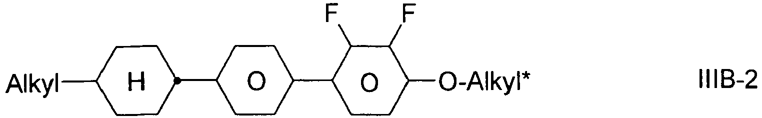 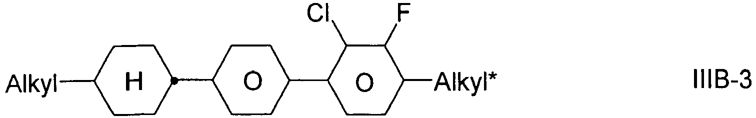 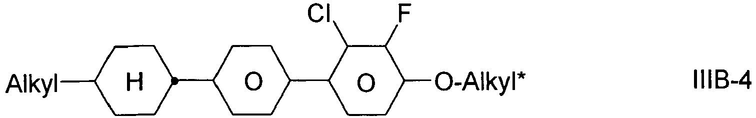 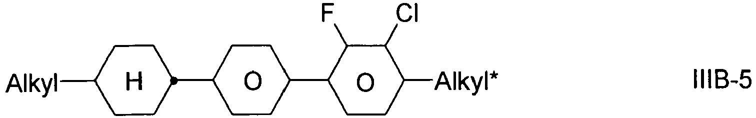 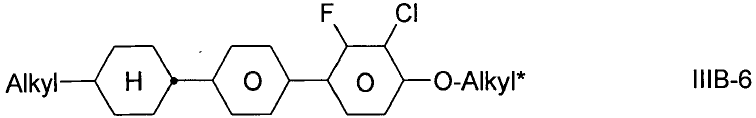 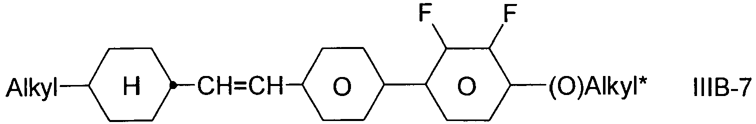 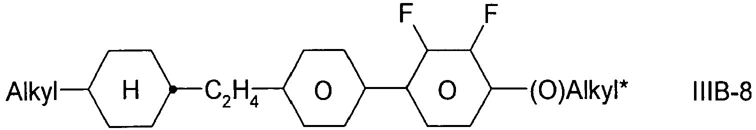 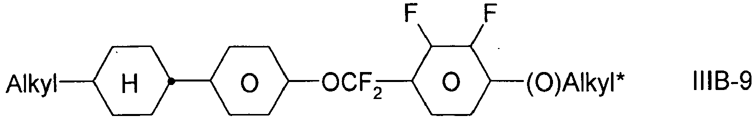 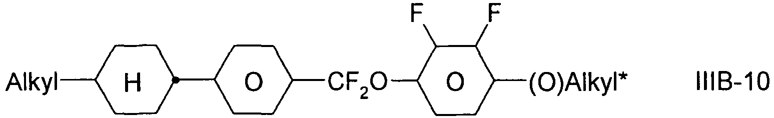 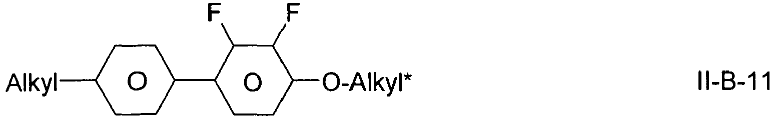 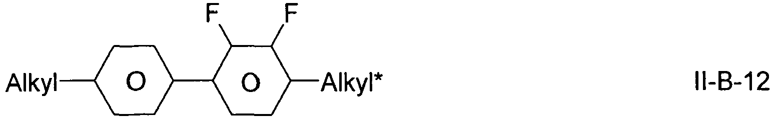 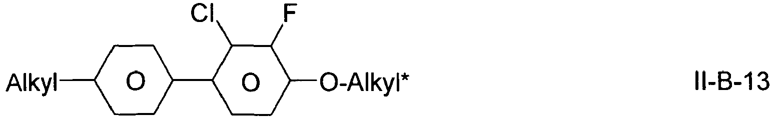 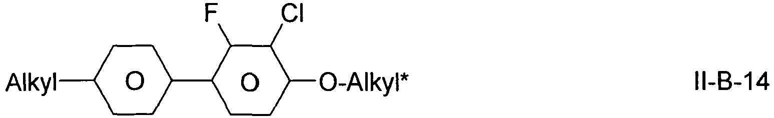 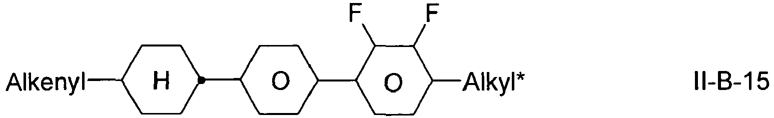 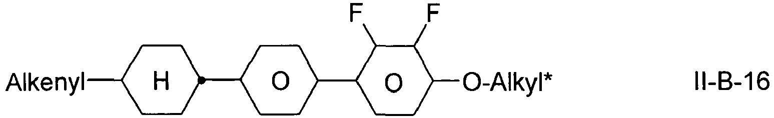 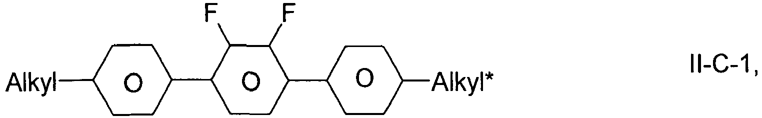 worin Alkyl und Alkyl* jeweils unabhängig voneinander einen geradkettigen Alkylrest mit 1-6 C-Atomen bedeuten.

Besonders bevorzugte erfindungsgemäße Mischungen enthalten eine oder mehrere Verbindungen der Formeln IIIA-2, IIIA-8, IIIA-14, IIIA-29, IIIA-35, IIIB-2, IIIB-11, IIIB-16 und IIIC-1.

Vorzugsweise beträgt der Anteil an Verbindungen der Formeln IIIA und/oder IIIB im Gesamtgemisch mindestens 20 Gew.%.

Besonders bevorzugte erfindungsgemäße Medien enthalten mindestens eine Verbindung der Formel IIIC-1, 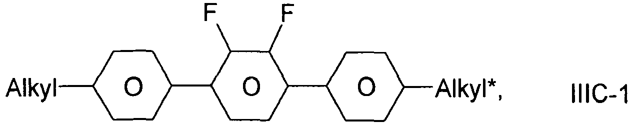 worin Alkyl und Alkyl^{*'} die oben angegebenen Bedeutungen haben, vorzugsweise in Mengen von > 3 Gew.%, insbesondere > 5 Gew.% und besonders bevorzugt von 5-25 Gew.%.
FK-Medium, welches zusätzlich eine oder mehrere Verbindungen der folgenden Formel enthält: 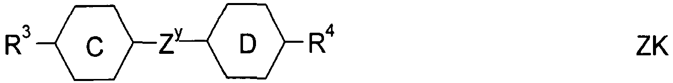 worin die einzelnen Reste folgende Bedeutung besitzen 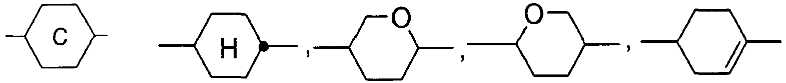 oder 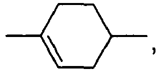 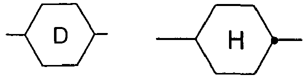 oder 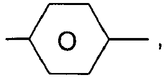
- R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -O-CO- oder -CO-O- so ersetzt sein können, dass O-Atome nicht direkt miteinander verknüpft sind,
- Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung.

Die Verbindungen der Formel ZK sind vorzugsweise ausgewählt aus der Gruppe bestehend aus folgenden Unterformeln: 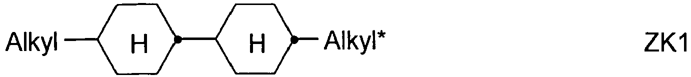 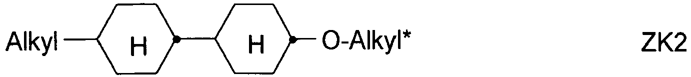 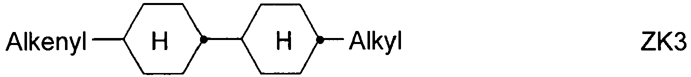 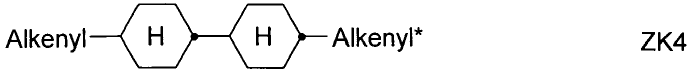 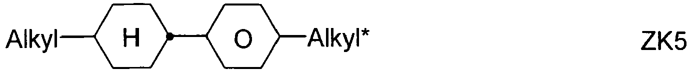 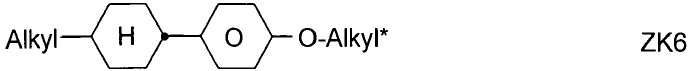 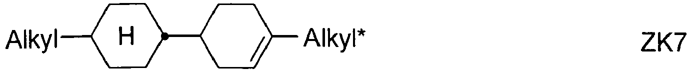 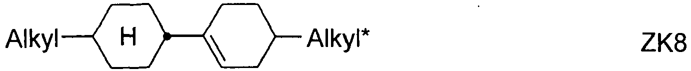 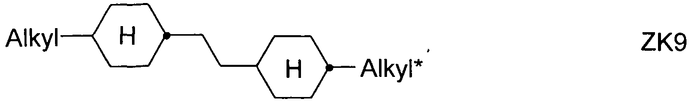 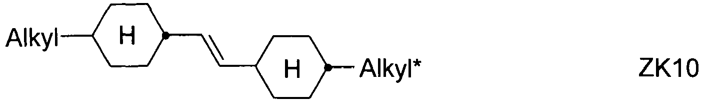 worin Alkyl und Alkyl* jeweils unabhängig voneinander einen geradkettigen Alkylrest mit 1-6 C-Atomen bedeuten, und Alkenyl und Alkenyl* einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
c) FK-Medium, welches zusätzlich eine oder mehrere Verbindungen der folgenden Formel enthält: 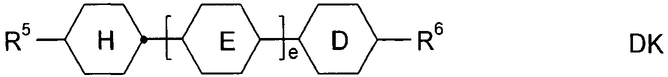 worin die einzelnen Reste bei jedem Auftreten gleich oder verschieden folgende Bedeutung haben:
   - R⁵ und R⁶: jeweils unabhängig voneinander eine der oben für R^{3/4} angegebenen Bedeutungen, 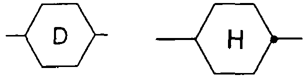 oder 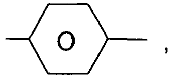 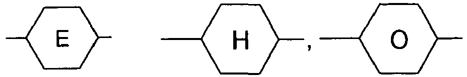 oder 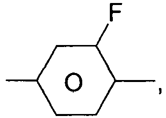 und
   - e: 1 oder 2.

Die Verbindungen der Formel DK sind vorzugsweise ausgewählt aus der Gruppe bestehend aus folgenden Unterformeln: 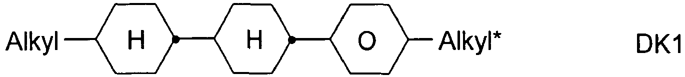 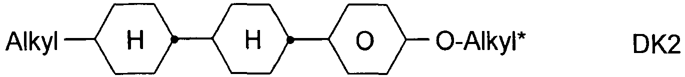 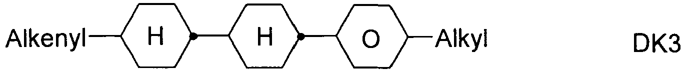 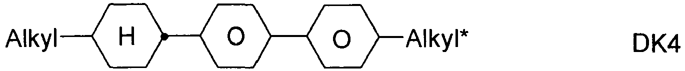 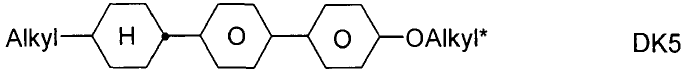 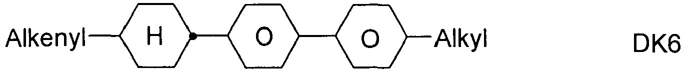 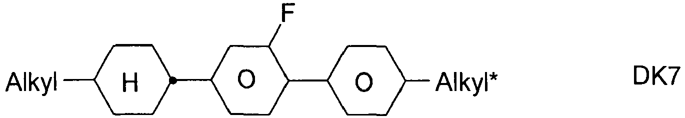 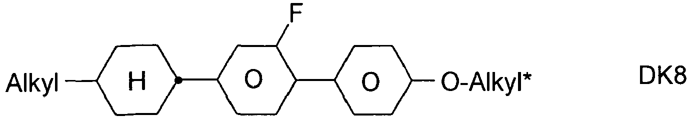 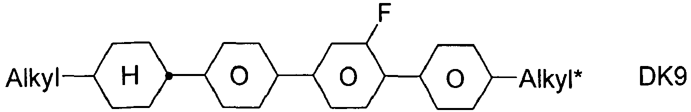 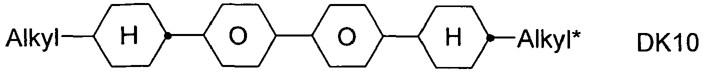 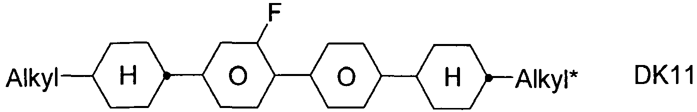 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
d) FK-Medium, welches zusätzlich eine oder mehrere Verbindungen der folgenden Formel enthält: 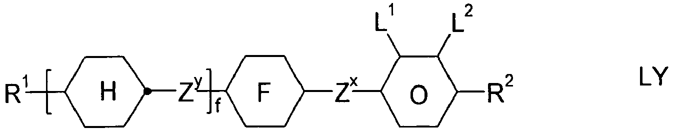 worin die einzelnen Reste folgende Bedeutung besitzen 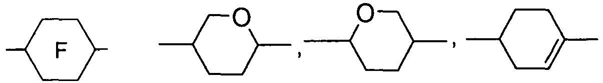 oder

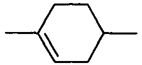

- f: 0 oder 1,
- R¹ und R²: jeweils unabhängig voneinander Alkyl mit 1 bis 12 C-Atomen, wobei auch eine oder zwei nicht benachbarte CH₂-Gruppen durch -O-, -CH=CH-, -CF=CF-, -CO-, -O(CO)-oder -(CO)O- so ersetzt sein können, dass O-Atome nicht direkt miteinander verknüpft sind,
- Z^{x} und Z^{y}: jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung,
- L¹ und L²: jeweils unabhängig voneinander F, Cl, OCF₃, CF₃, CH₃, CH₂F, CHF₂.

Vorzugsweise bedeuten beide Reste L¹ und L² F oder einer der Reste L¹ und L² F und der andere Cl.

Die Verbindungen der Formel LY sind vorzugsweise ausgewählt aus der Gruppe bestehend aus folgenden Unterformeln 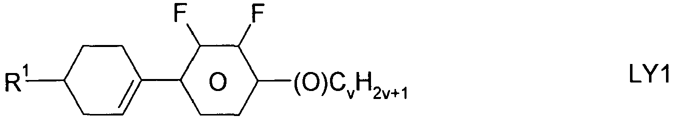 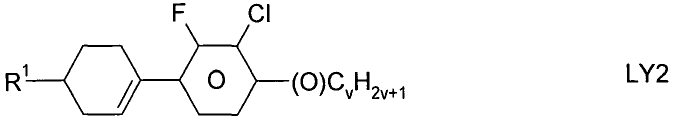 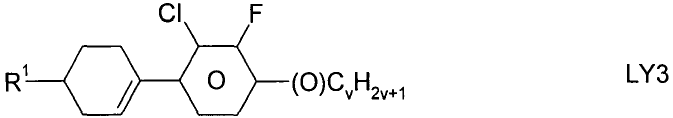 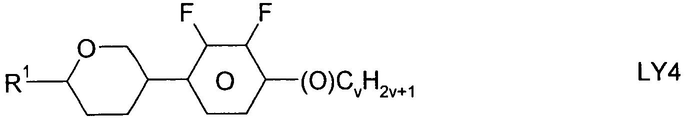 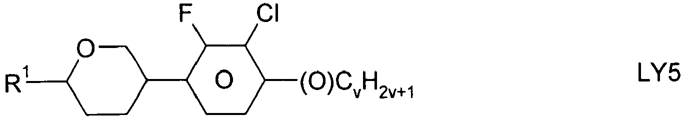 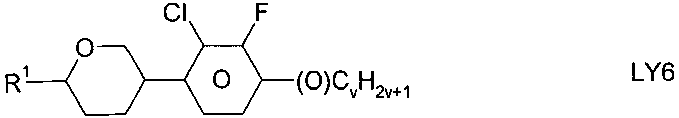 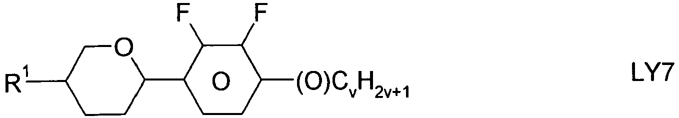 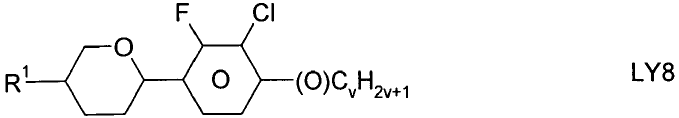 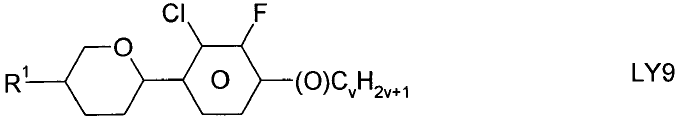 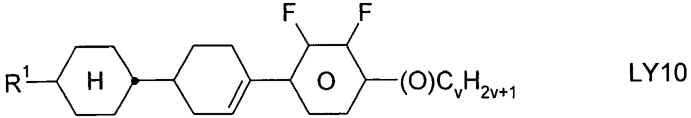 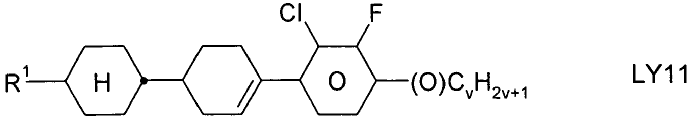 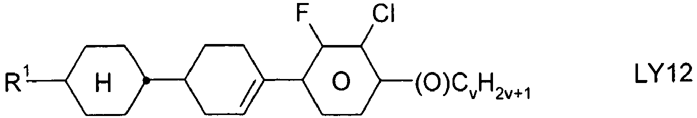 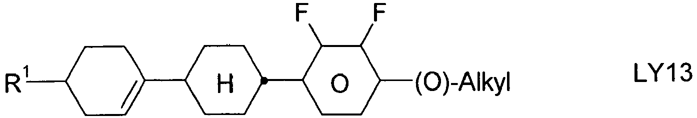 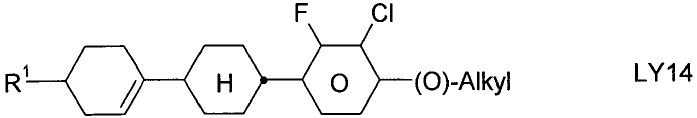 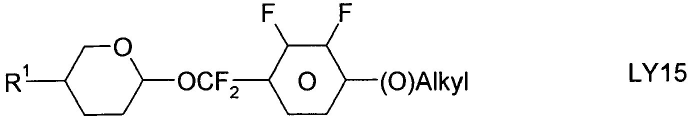 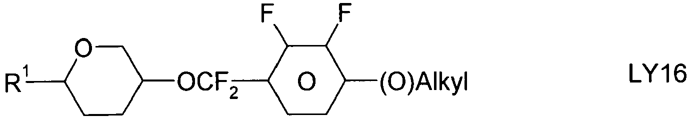 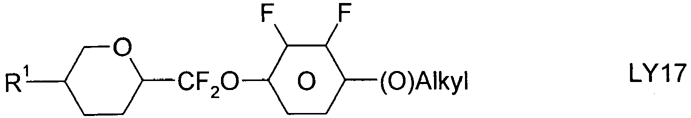 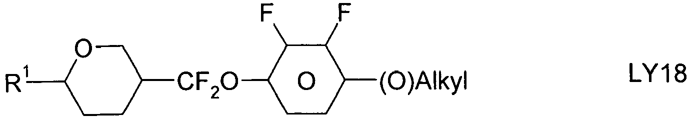 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen oder geradkettiges Alkenyl mit 2 bis 6 C-Atomen, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
e) FK-Medium, welches zusätzlich eine oder mehrere Verbindungen ausgewählt aus der Gruppe bestehend aus folgenden Formeln enthält: 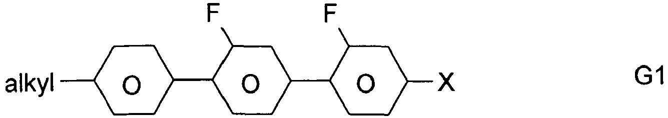 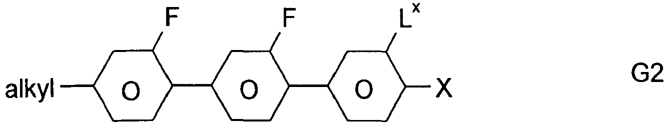 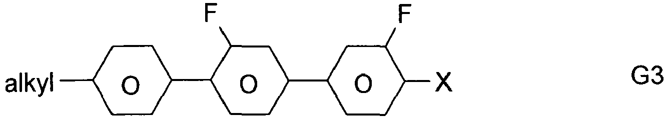 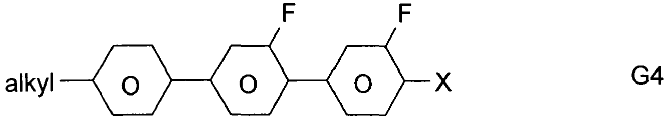 worin alkyl C₁₋₆-alkyl, L^{x} H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus der Gruppe bestehend aus folgenden Formeln enthält: 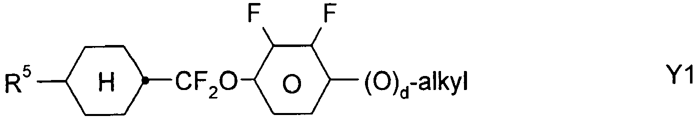 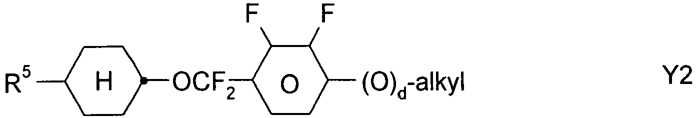 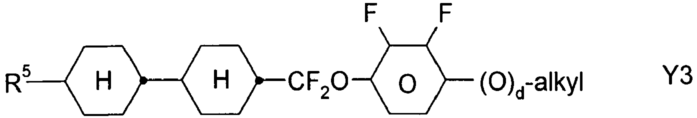 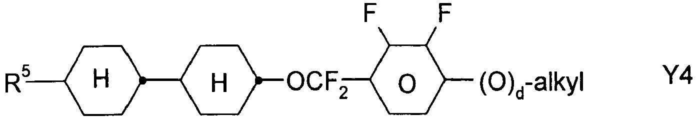 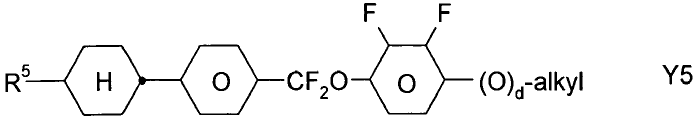 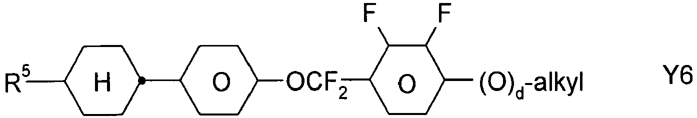 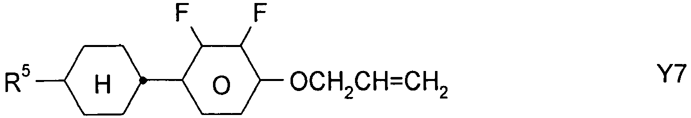 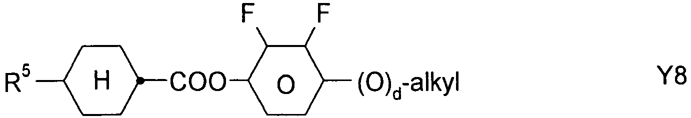 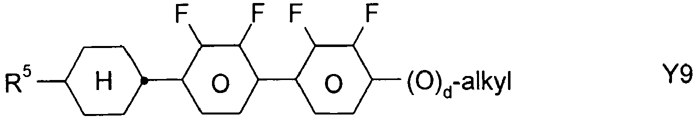 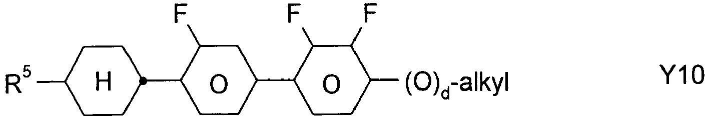 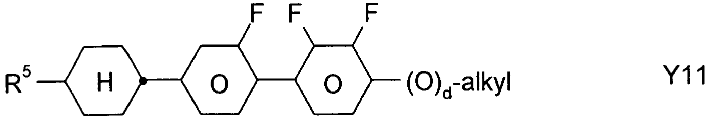 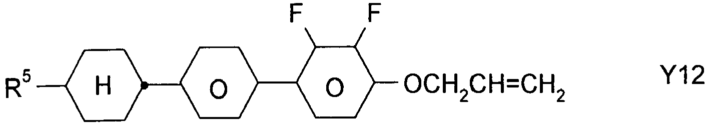 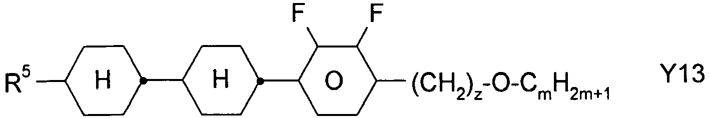 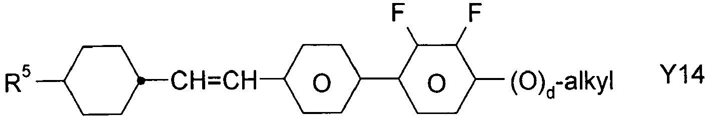 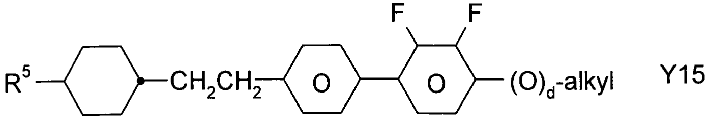 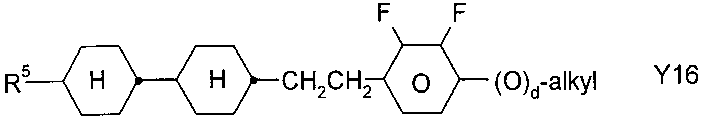 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, welches zusätzlich eine oder mehrere Biphenylverbindungen ausgewählt aus der Gruppe bestehend aus folgenden Formeln enthält: 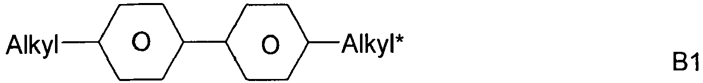 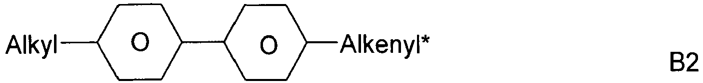 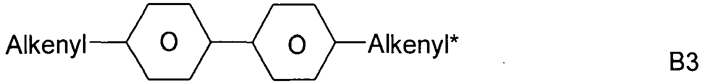 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Der Anteil der Biphenyle der Formeln B1 bis B3 in der FK-Mischung beträgt vorzugsweise mindestens 3 Gew.%, insbesondere ≥ 5 Gew.%.

Die Verbindungen der Formel B2 sind besonders bevorzugt.

Die Verbindungen der Formel B1 bis B3 sind vorzugsweise ausgewählt aus der Gruppe bestehend aus folgenden Unterformeln 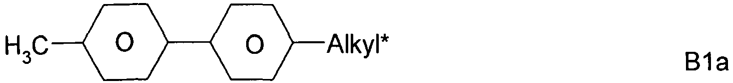 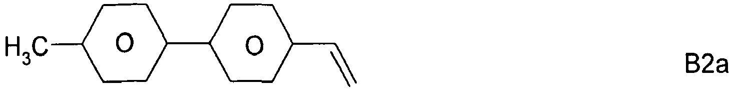 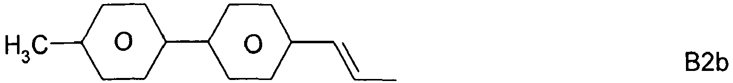 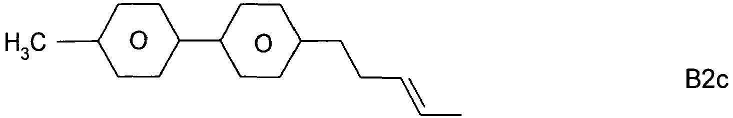 worin Alkyl* einen Alkylrest mit 1-6 C-Atomen bedeutet. Insbesondere bevorzugt enthält das erfindungsgemäße Medium eine oder mehrere Verbindungen der Formeln B1a und/oder B2c.
h) FK-Medium, welches zusätzlich eine oder mehrere Terphenylverbindungen der folgenden Formel enthält: 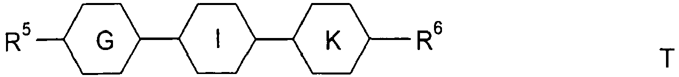 worin R⁵ und R⁶ jeweils unabhängig voneinander eine der oben für R¹ angegebenen Bedeutungen besitzen und 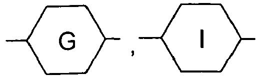 und 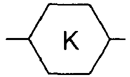 jeweils unabhängig voneinander 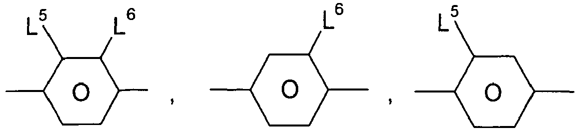 oder 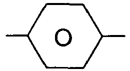
bedeuten, worin L⁵ F oder Cl. vorzugsweise F, und L⁶ F, Cl, OCF₃, CF₃, CH₃, CH₂F oder CHF₂, vorzugsweise F, bedeuten.

Die Verbindungen der Formel T sind vorzugsweise ausgewählt aus der Gruppe bestehend aus folgenden Unterformeln 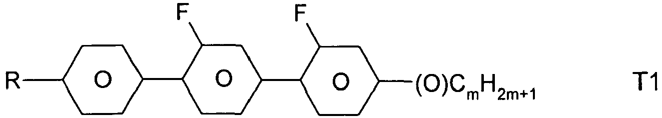 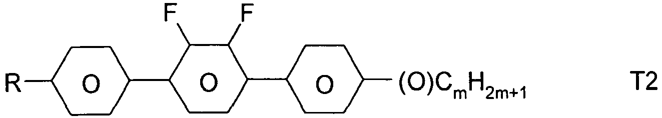 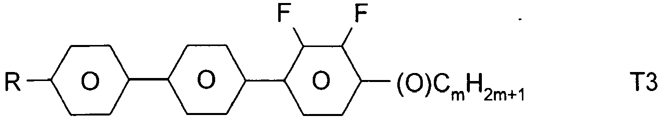 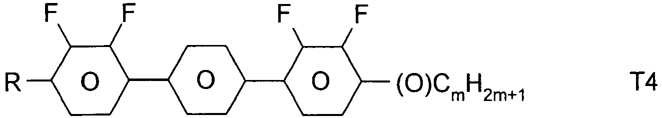 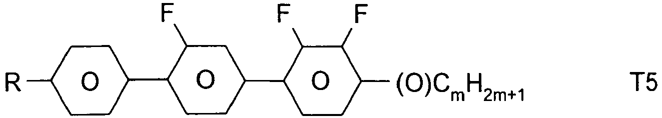 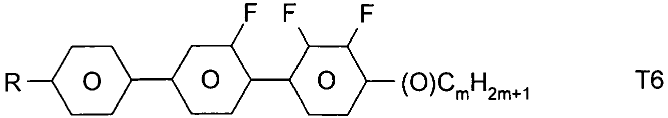 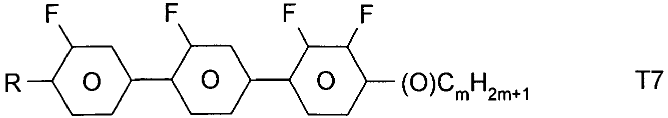 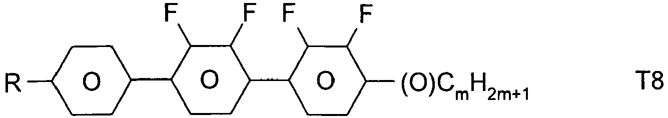 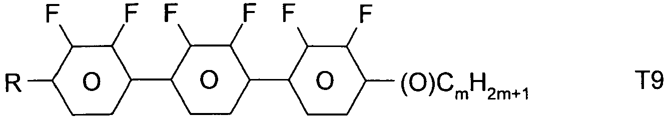 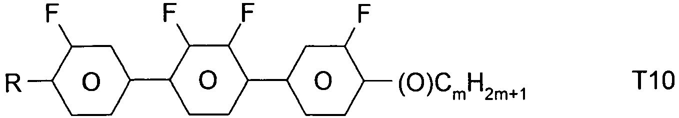 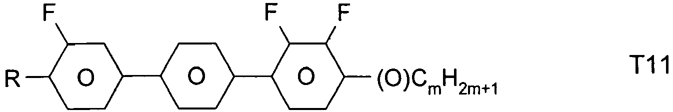 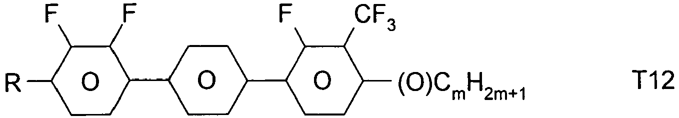 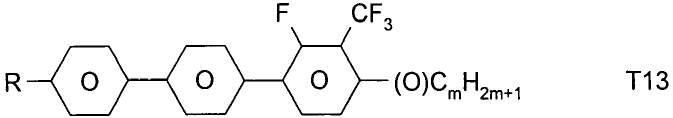 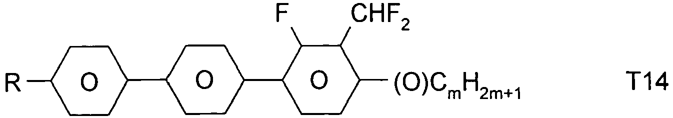 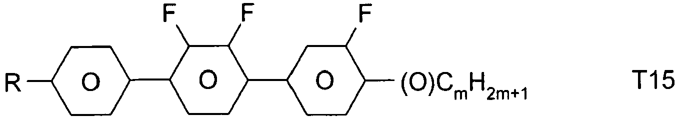 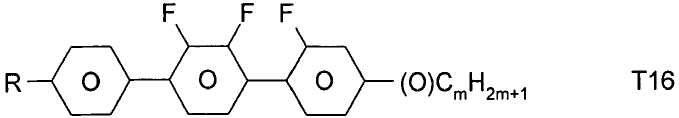 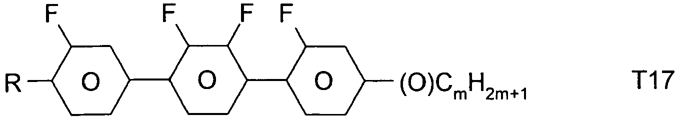 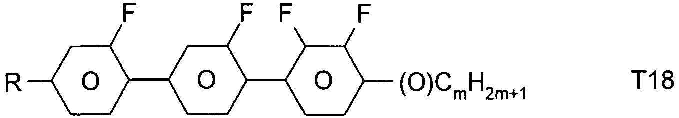 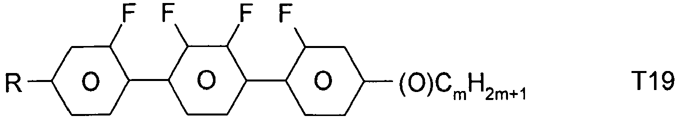 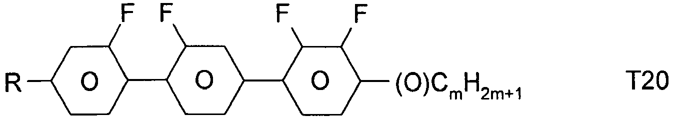 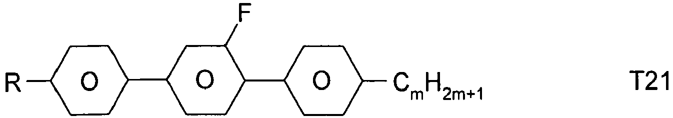 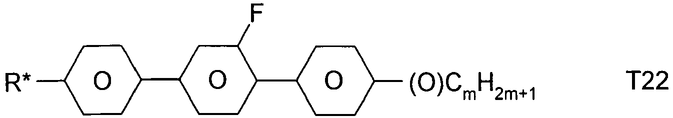 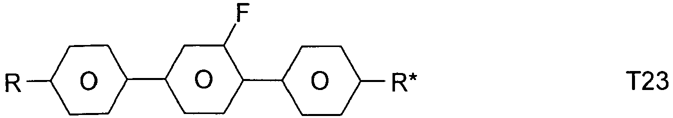 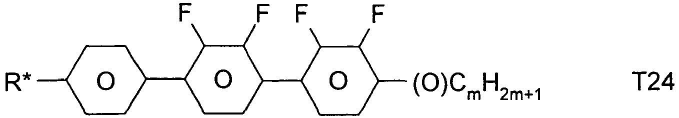 worin R einen geradkettigen Alkyl- oder Alkoxyrest mit 1-7 C-Atomen, R* einen geradkettigen Alkenylrest mit 2-7 C-Atomen, (O) ein Sauerstoffatom oder eine Einfachbindung, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Vorzugsweise bedeutet R Methyl, Ethyl, Propyl, Butyl, Pentyl, Hexyl Methoxy, Ethoxy, Propoxy, Butoxy oder Pentoxy.

Das erfindungsgemäße FK-Medium enthält die Terphenyle der Formeln T und deren bevorzugte Unterformeln vorzugsweise in einer Menge von 0,5-30 Gew.%, insbesondere von 1-20 Gew.%.

Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.

Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen ausgewählt aus der Gruppe bestehend aus folgenden Formeln enthält: 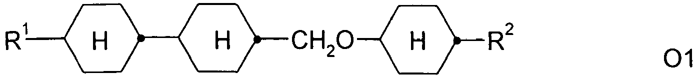 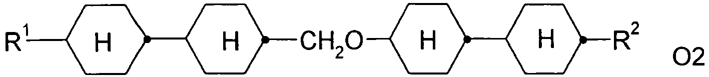 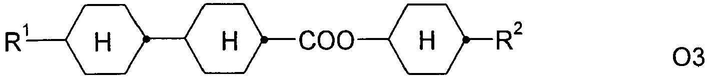 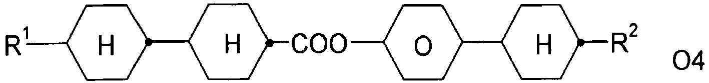 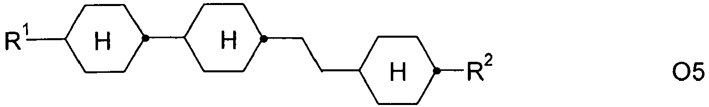 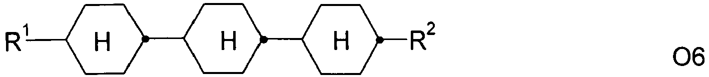 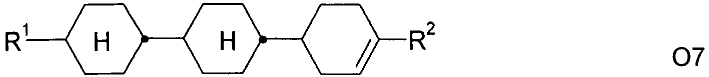 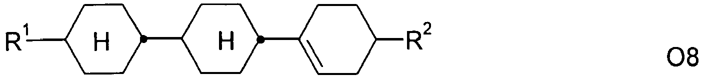 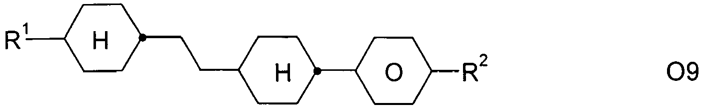 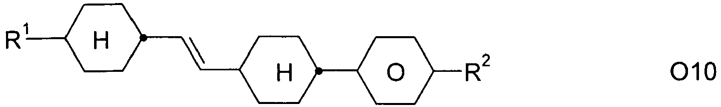 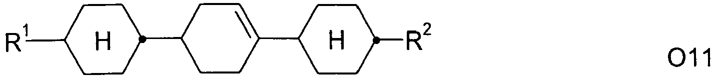 worin R¹ und R² die oben für Formel LY angegebenen Bedeutungen haben, und vorzugsweise jeweils unabhängig voneinander geradkettiges Alkyl mit 1 bis 6 C-Atomen oder geradkettiges Alkenyl mit 2 bis 6 C-Atomen bedeuten.

Bevorzugte Medien enthalten eine oder mehrere Verbindungen ausgewählt aus den Formeln 01, 03 und 04.
k) FK-Medium, welches zusätzlich eine oder mehrere Verbindungen der folgenden Formel enthält: 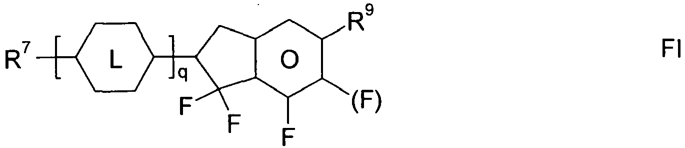 worin 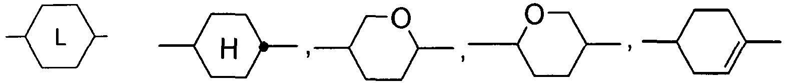 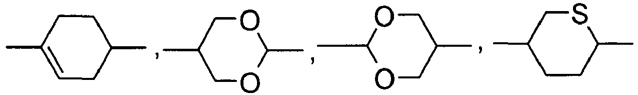 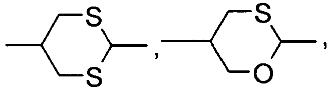 R⁹ H, CH₃, C₂H₅ oder n-C₃H₇, (F) einen optionalen Fluor-substituenten und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.

Besonders bevorzugte Verbindungen der Formel FI sind ausgewählt aus der Gruppe bestehend aus folgenden Unterformeln: 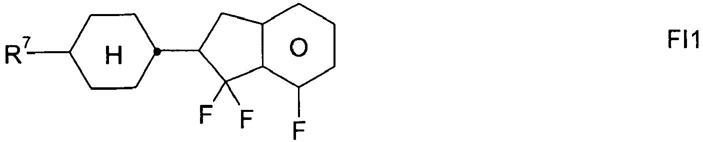 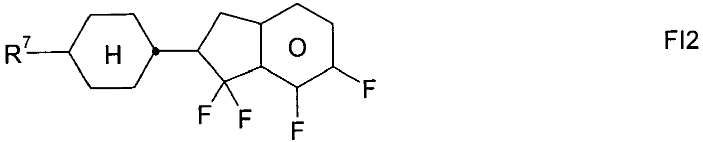 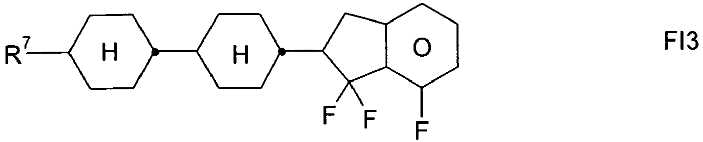 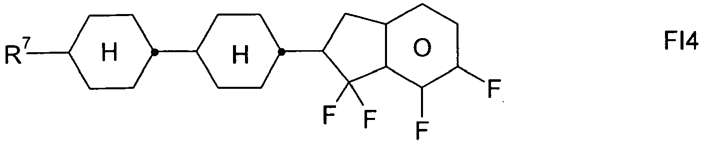 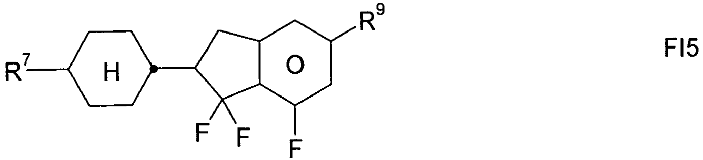 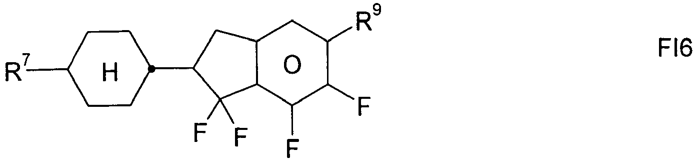 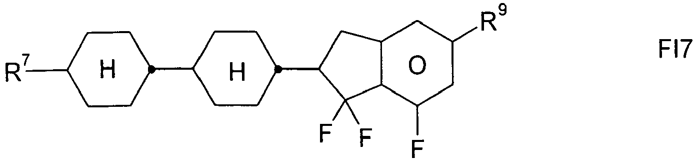 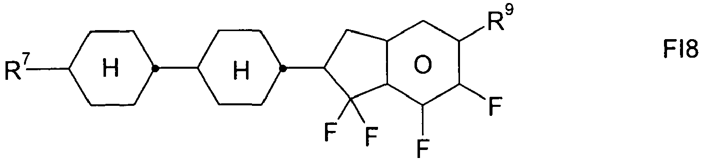 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
m) FK-Medium, welches zusätzlich eine oder mehrere Verbindungen ausgewählt aus der Gruppe bestehend aus folgenden Formeln enthält: 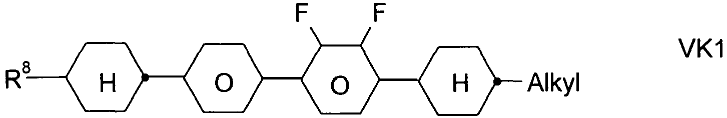 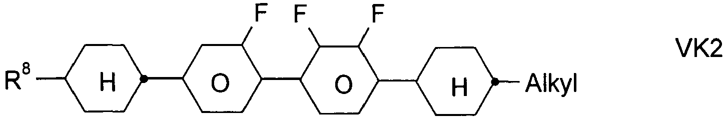 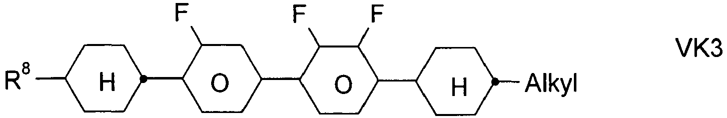 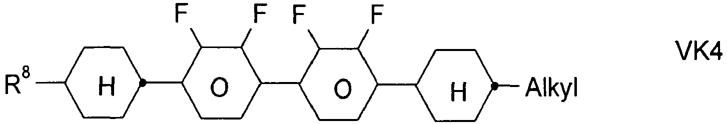 worin R⁸ die für R¹ für Formel LY angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus der Gruppe bestehend aus folgenden Formeln: 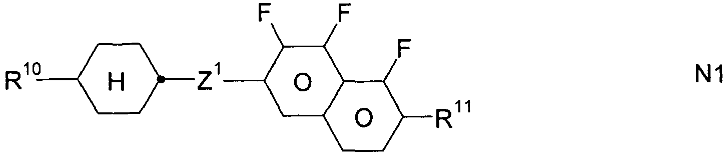 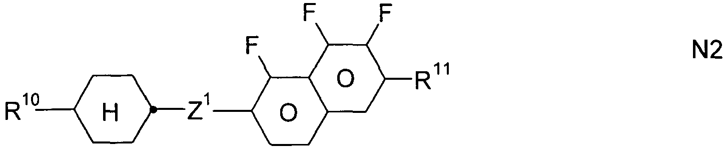 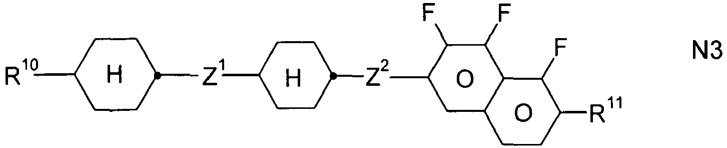 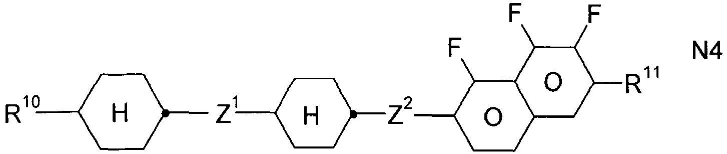 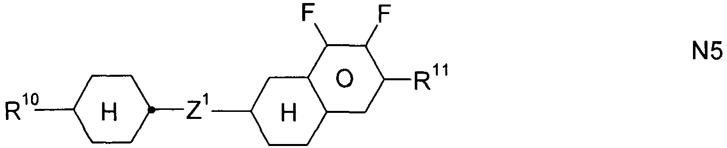 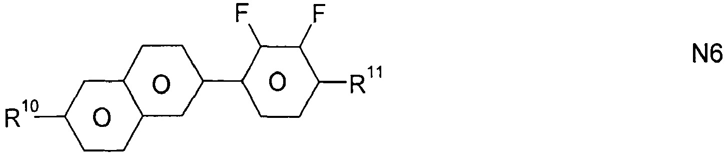 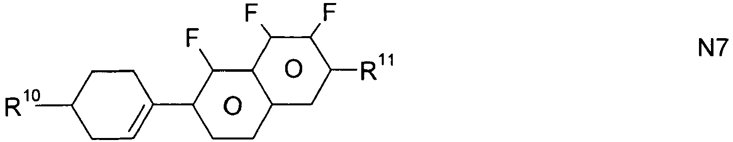 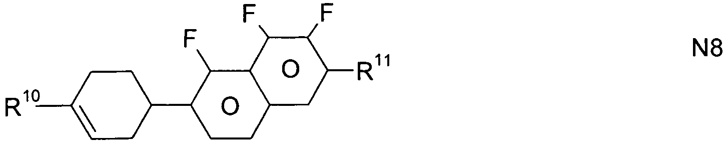 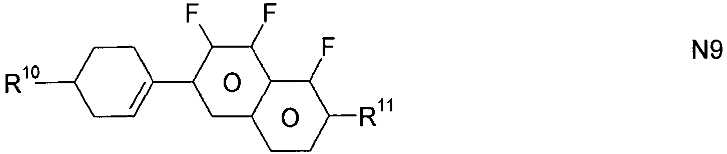 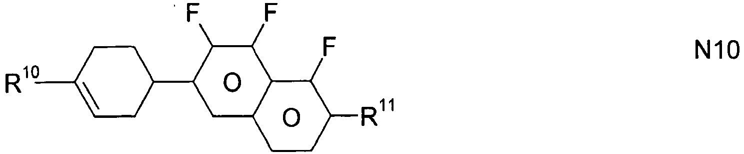 worin R¹⁰ und R¹¹ jeweils unabhängig voneinander eine der für R¹ für Formel LY angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂-oder eine Einfachbindung bedeuten.
o) FK-Medium, welches zusätzlich eine oder mehrere eine oder mehrere Difluordibenzochromane und/oder Chromane der folgenden Formeln enthält: 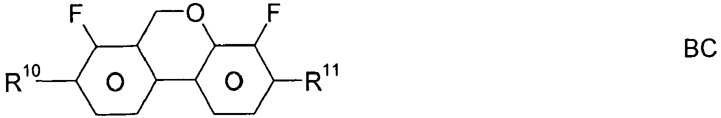 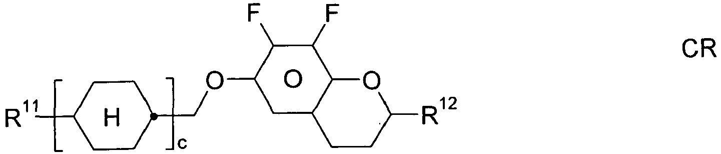
worin R¹⁰ und R¹¹ jeweils unabhängig voneinander die oben für R¹ in Formel LY angegebene Bedeutung aufweisen, und c 0 oder 1 bedeutet, vorzugsweise in Mengen von 3 bis 20 Gew.%, insbesondere in Mengen von 3 bis 15 Gew.%.

Besonders bevorzugte Verbindungen der Formeln BC und CR sind ausgewählt aus der Gruppe bestehend aus folgenden Unterformeln: 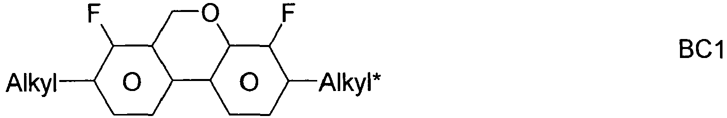 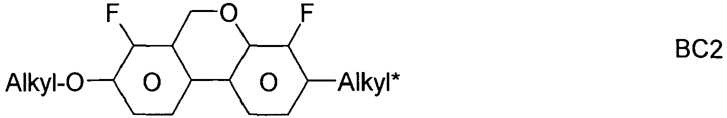 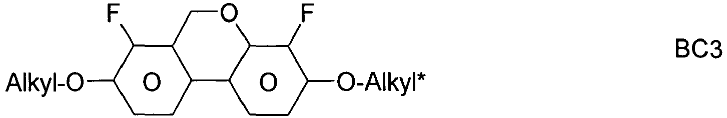 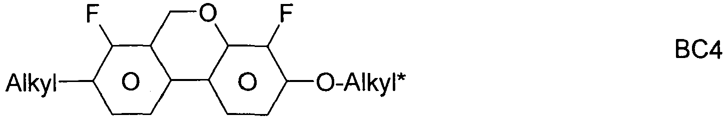 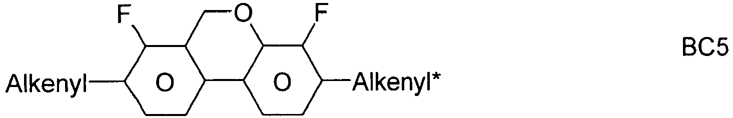 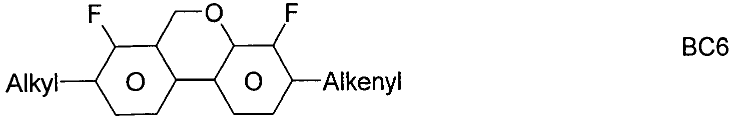 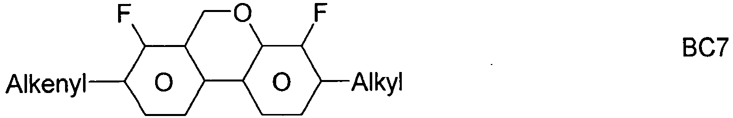 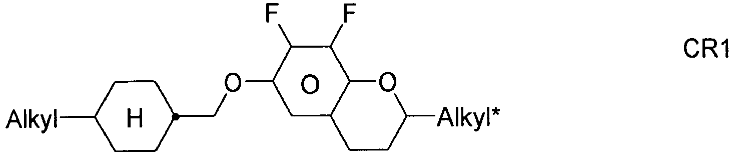 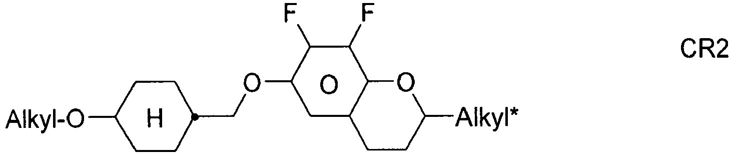 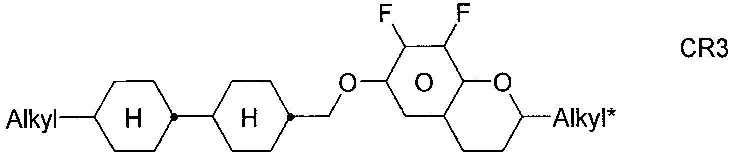 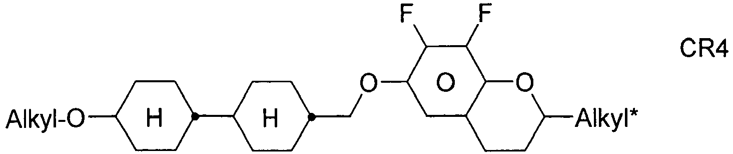 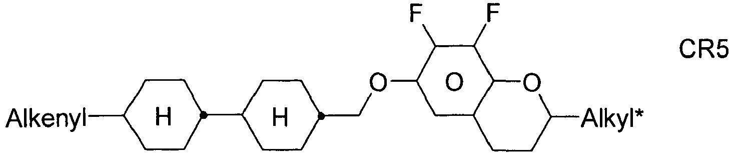 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Ganz besonders bevorzugt sind Mischungen enthaltend eine, zwei oder drei Verbindungen der Formel BC-2.
p) FK-Medium, welches zusätzlich eine oder mehrere fluorierte Phenanthrene und/oder Dibenzofurane der folgenden Formeln enthält: 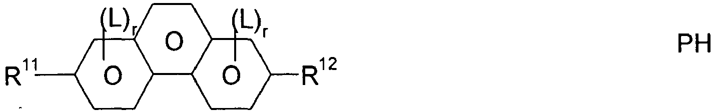 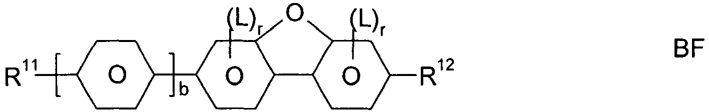 worin R¹¹ und R¹² jeweils unabhängig voneinander die oben für R¹ in Formel LY angegebenen Bedeutungen besitzen, b 0 oder 1, L F und r 1, 2 oder 3 bedeutet.

Besonders bevorzugte Verbindungen der Formeln PH und BF sind ausgewählt aus der Gruppe bestehend aus folgenden Unterformeln: 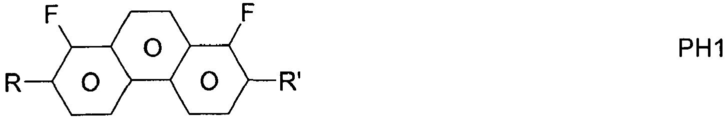 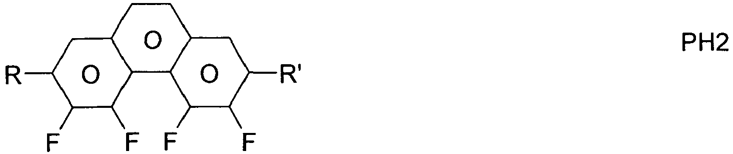 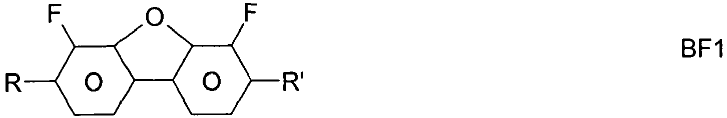 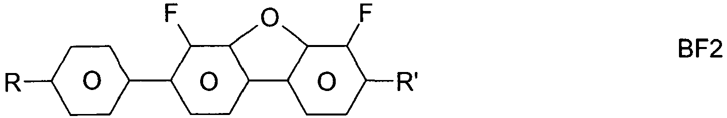 worin R und R' jeweils unabhängig voneinander einen geradkettigen Alkyl- oder Alkoxyrest mit 1-7 C-Atomen bedeuten.

Die erfindungsgemäße Flüssigkristallmischung ist mit einer dielektrischen Anisotropie (Δε) von ≤-1,5 dielektrisch negativ. Die Verbindungen der Formeln IIIA, IIIB, IIIC, LY1-LY18, Y1-Y16, T1-T24, FI, VK1-VK4, N1-N10, BC, CR, PH und BF eignen sich als dielektrisch negative Komponente. Bevorzugt sind die dielektrisch negativen Verbindungen der Formeln ausgewählt aus den Formeln IIIA, IIIB und IIIC. Das FK-Medium weist vorzugsweise ein Δε von -1,5 bis -8,0, insbesondere von -2,5 bis -6,0 auf.

Die Werte der Doppelbrechung Δn in der Flüssigkristallmischung liegen in der Regel zwischen 0,07 und 0,16, vorzugsweise zwischen 0,08 und 0,12. Die Rotationsviskosität γ1 bei 20 °C vor der Polymerisation ist vorzugsweise ≤ 165 mPa·s, insbesondere ≤ 140 mPa·s.

Folgende Abkürzungen werden verwendet:
(n, m, z: jeweils unabhängig voneinander 1, 2, 3, 4, 5 oder 6)

**Tabelle A**

| In einer bevorzugten Ausführungsform der vorliegenden Erfindung enthalten die erfindungsgemäßen FK-Medien eine oder mehrere Verbindungen ausgewählt aus der Gruppe bestehend aus Verbindungen der Tabelle A. | |
|---|---|
| 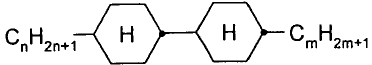 | 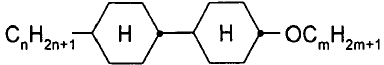 |
| CCH-nm | CCH-nOm |
| 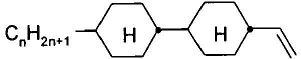 | 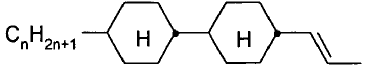 |
| CC-n-V | CC-n-V1 |
| 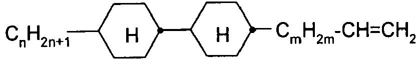 | 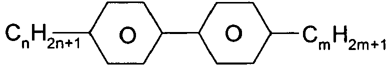 |
| CC-n-mV | PP-n-m |
| 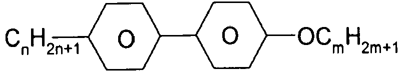 | 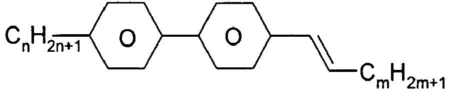 |
| PP-n-Om | PP-n-Vm |
| 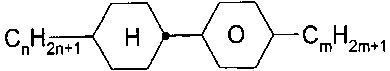 | 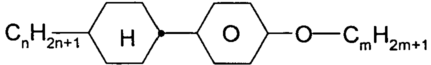 |
| PCH-nm | PCH-nOm |
| 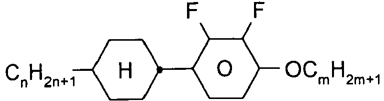 | 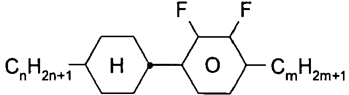 |
| CY-n-Om | CY-n-m |
| 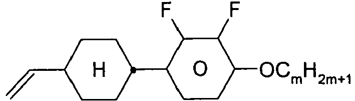 | 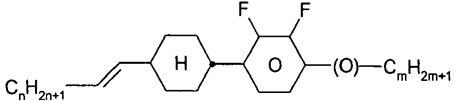 |
| CY-V-Om | CY-nV-(O)m |
| 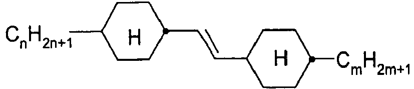 | 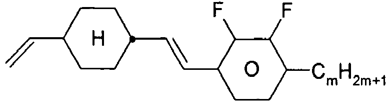 |
| CVC-n-m | CVY-V-m |
| 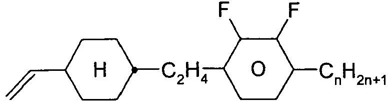 | 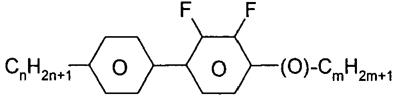 |
| CEY-V-m | PY-n-(O)m |
| 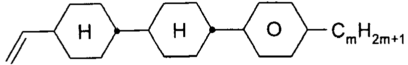 | 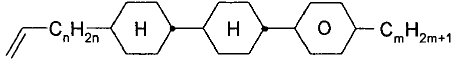 |
| CCP-V-m | CCP-Vn-m |
| 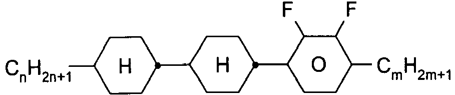 | 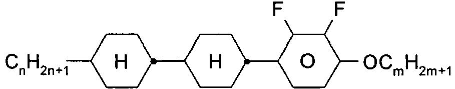 |
| CCY-n-m | CCY-n-Om |
| 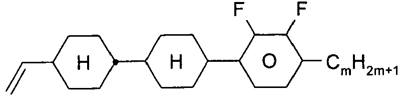 | 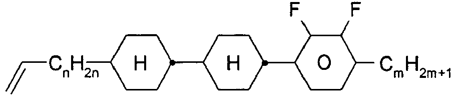 |
| CCY-V-m | CCY-Vn-m |
| 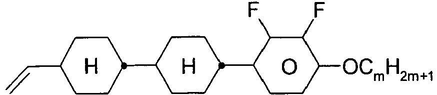 | 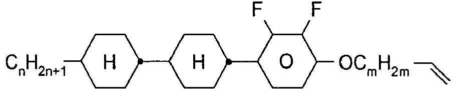 |
| CCY-V-Om | CCY-n-OmV |
| 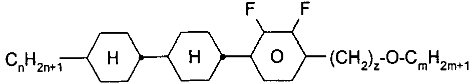 | 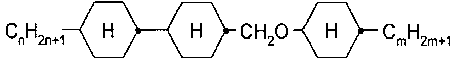 |
| CCY-n-zOm | CCOC-n-m |
| 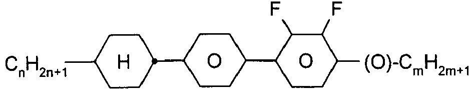 | 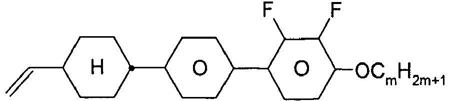 |
| CPY-n-(O)m | CPY-V-Om |
| 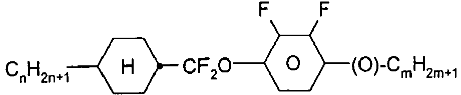 | 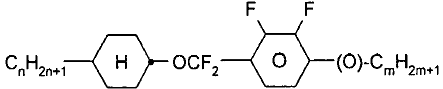 |
| CQY-n-(O)m | CQIY-n-(O)m |
| 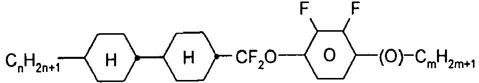 | 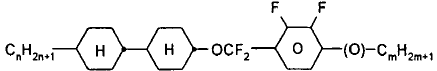 |
| CCQY-n-(O)m | CCQIY-n-(O)m |
| 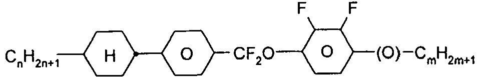 | 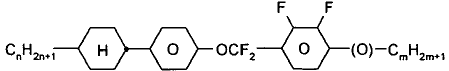 |
| CPQY-n-(O)m | CPQIY-n-Om |
| 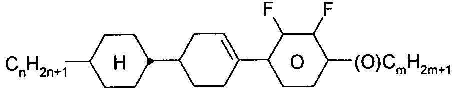 | 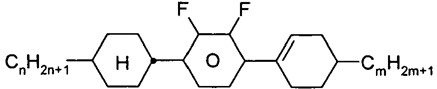 |
| CLY-n-(O)m | CYLI-n-m |
| 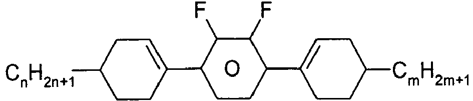 | 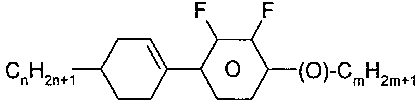 |
| LYLI-n-m | LY-n-(O)m |
| 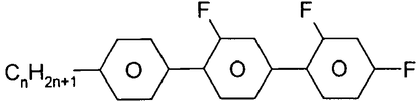 | 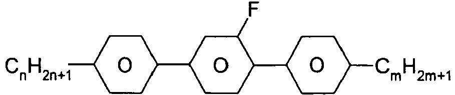 |
| PGIGI-n-F | PGP-n-m |
| 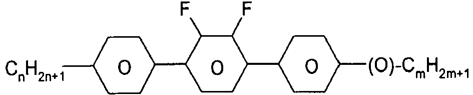 | 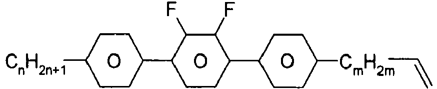 |
| PYP-n-(O)m | PYP-n-mV |
| 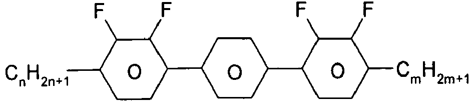 | 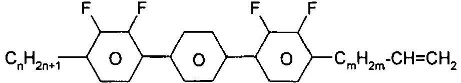 |
| YPY-n-m | YPY-n-mV |
| 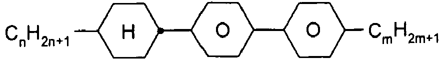 | 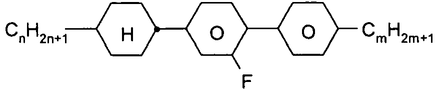 |
| BCH-nm | BCH-nmF |
| 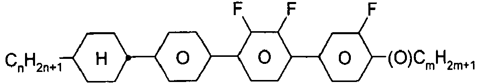 | 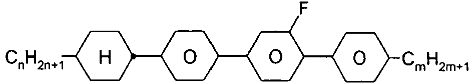 |
| CPYP-n-(O)m | CPGP-n-m |
| 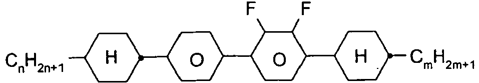 | 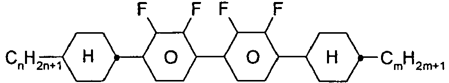 |
| CPYC-n-m | CYYC-n-m |
| 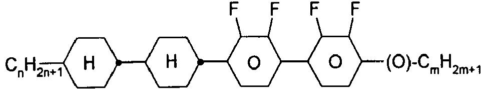 | 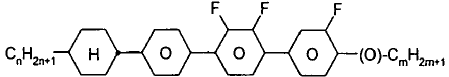 |
| CCYY-n-m | CPYG-n-(O)m |
| 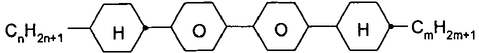 | 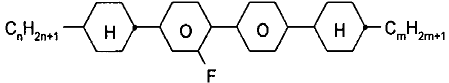 |
| CBC-nm | CBC-nmF |
| 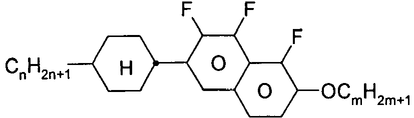 | 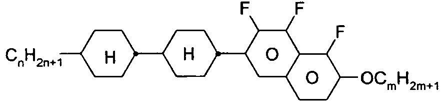 |
| CNap-n-Om | CCNap-n-Om |
| 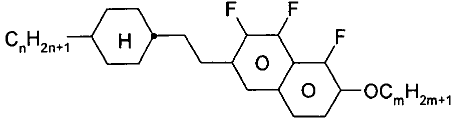 | 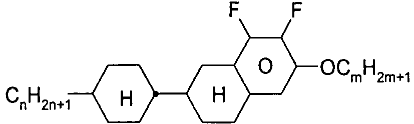 |
| CENap-n-Om | CTNap-n-Om |
| 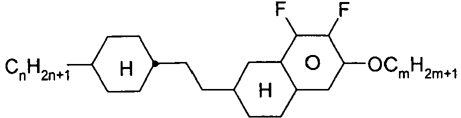 | 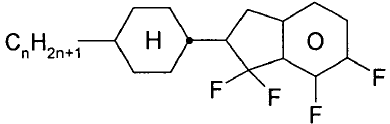 |
| CETNap-n-Om | CK-n-F |
| 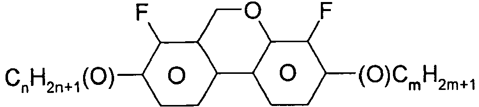 | 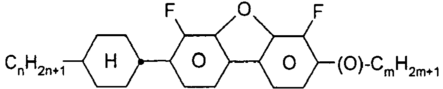 |
| DFDBC-n(O)-(O)m | C-DFDBF-n-(O)m |

**Tabelle B**

| In der Tabelle B werden mögliche chirale Dotierstoffe angegeben, die den erfindungsgemäßen FK-Medien zugesetzt werden können. | |
|---|---|
| 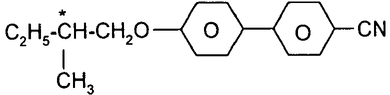 | 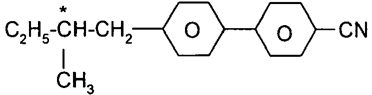 |
| **C 15** | **CB 15** |
| 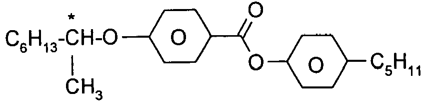 | 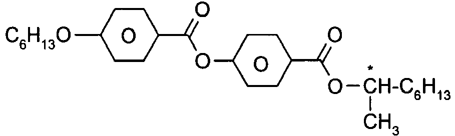 |
| **CM 21** | **R/S-811** |
| 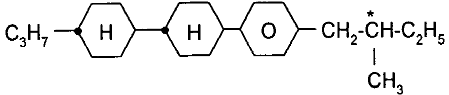 | 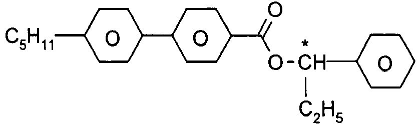 |
| **CM 44** | **CM 45** |
| 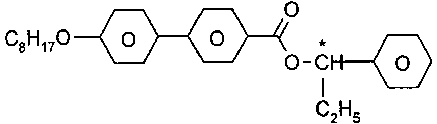 | 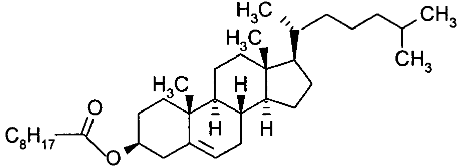 |
| CM **47** | **CN** |
| 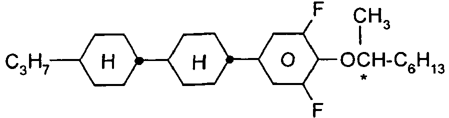 | 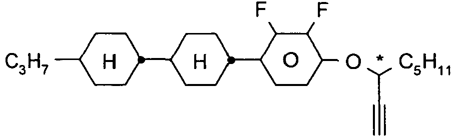 |
| **R/S-2011** | **RIS-3011** |
| 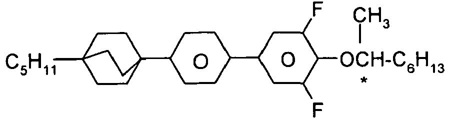 | 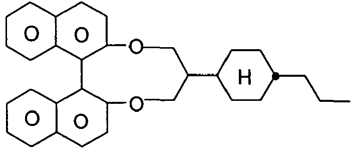 |
| **R/S-4011** | **R/S-5011** |
| 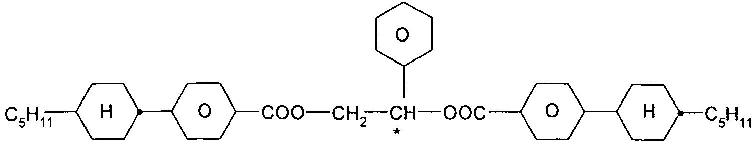 | |
| **R/S-1011** | |

Optional enthalten die FK-Medien 0 bis 10 Gew.%, insbesondere 0,01 bis 5 Gew.%, besonders bevorzugt 0,1 bis 3 Gew.% an Dotierstoffen, vorzugsweise ausgewählt aus der Gruppe bestehend aus Verbindungen der Tabelle B.

**Tabelle C**

| In der Tabelle C werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
|---|---|
| 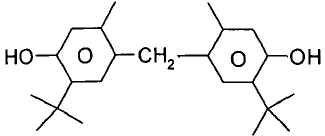 | 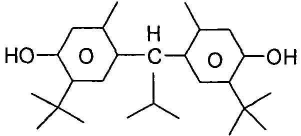 |
| 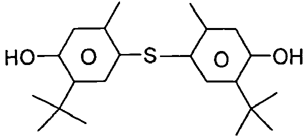 | 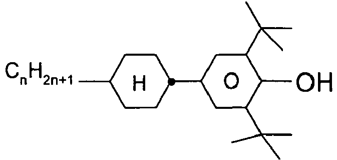 |
| 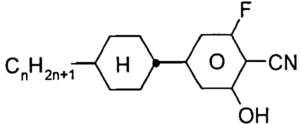 | 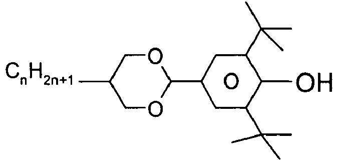 |
| 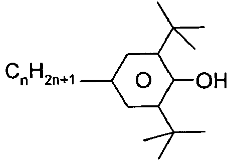 | 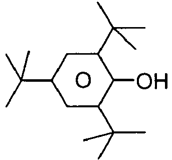 |
| 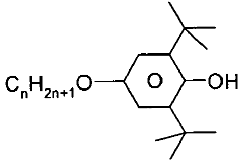 | 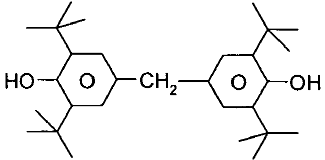 |
| 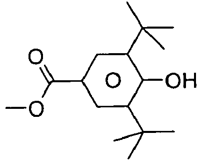 | 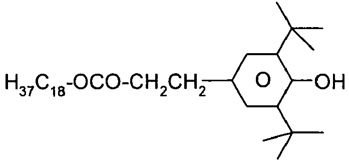 |
| 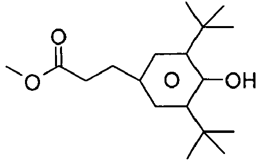 | 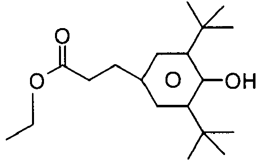 |
| 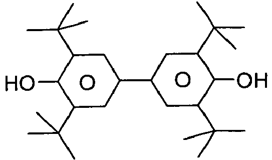 | 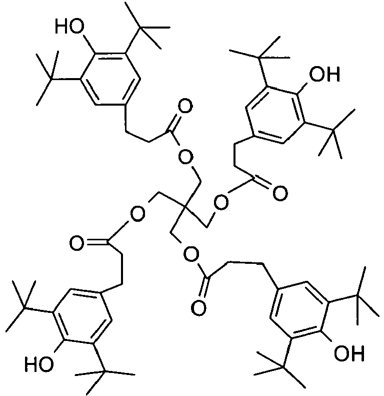 |
| 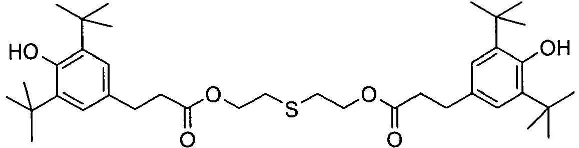 | |
| 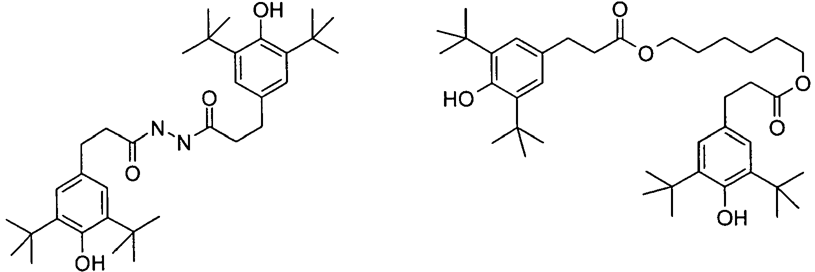 | |
| 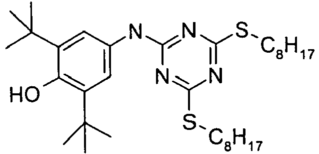 | 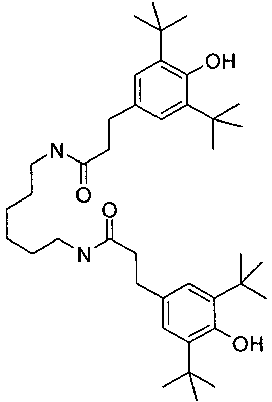 |
| 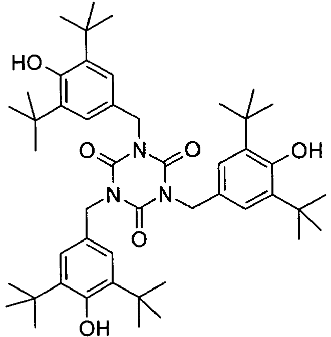 | 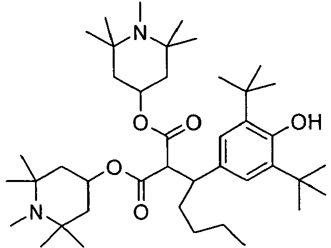 |
| 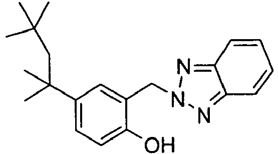 | 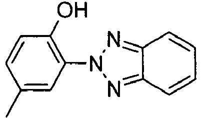 |
| 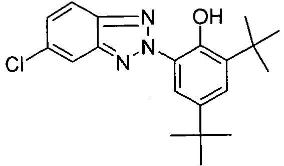 | 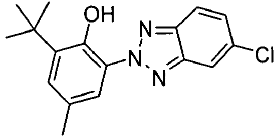 |
| 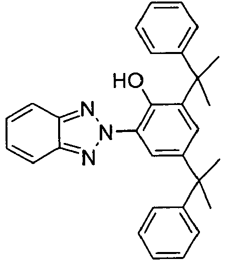 | 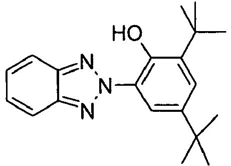 |
| 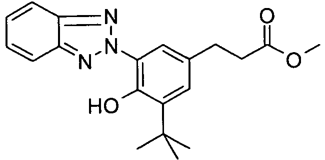 | 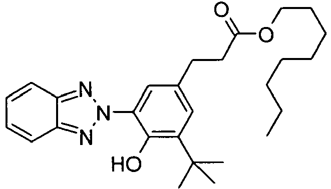 |
| 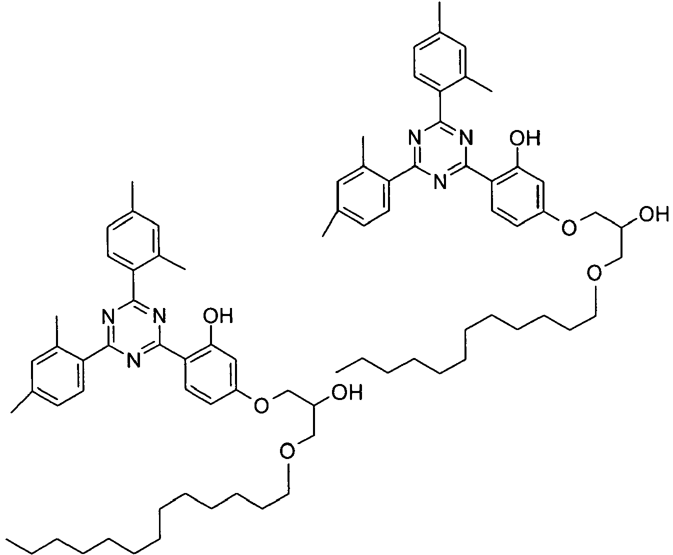 | |
| 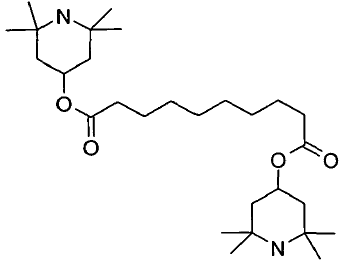 | 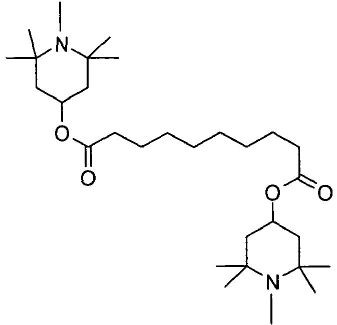 |

Vorzugsweise enthalten die FK-Medien 0 bis 10 Gew.%, insbesondere 1ppm bis 5 Gew.%, besonders bevorzugt 1ppm bis 1 Gew.% an Stabilisatoren. Vorzugsweise enthalten die FK-Medien einen oder mehrere Stabilisatoren ausgewählt aus der Gruppe bestehend aus Verbindungen der Tabelle C.

**Tabelle D**

| In der Tabelle D sind Beispielverbindungen zusammengestellt, die in den FK-Medien gemäß der vorliegenden Erfindung vorzugsweise als reaktive Verbindungen verwendet werden können. | |
|---|---|
| 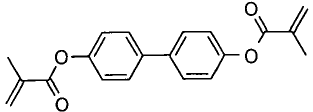 | 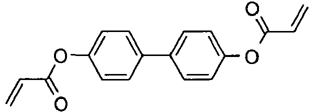 |
| **RM-1** | **RM-2** |
| 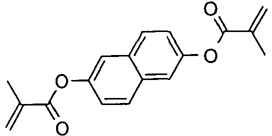 | 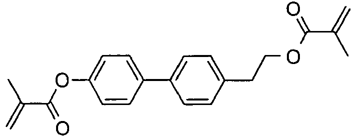 |
| **RM-3** | **RM-4** |
| 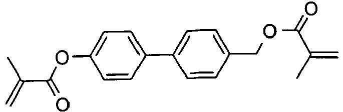 | 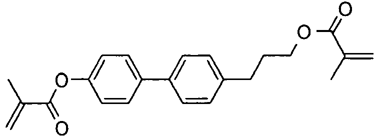 |
| **RM-5** | **RM-6** |
| 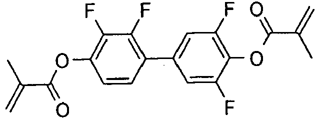 | 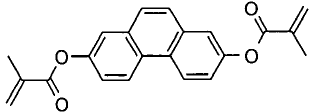 |
| **RM-7** | **RM-8** |
| 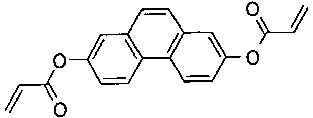 | 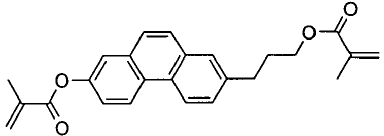 |
| **RM-9** | **RM-10** |
| 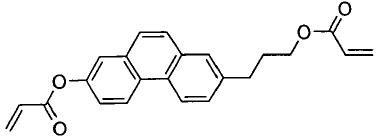 | 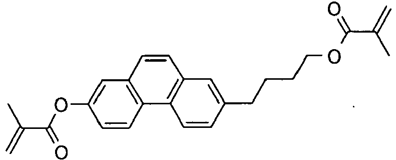 |
| **RM-11** | **RM-12** |
| 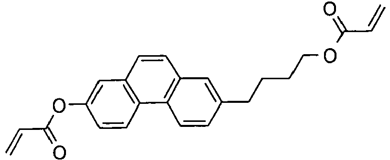 | |
| **RM-13** | |
| 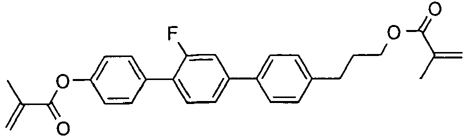 | |
| **RM-14** | |
| 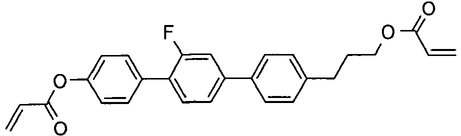 | |
| **RM-15** | |
| 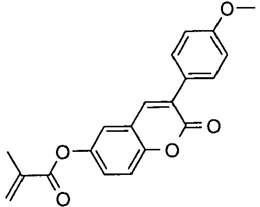 | 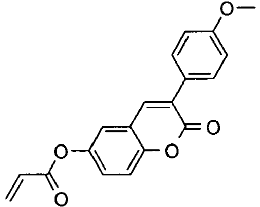 |
| **RM-16** | **RM-17** |
| 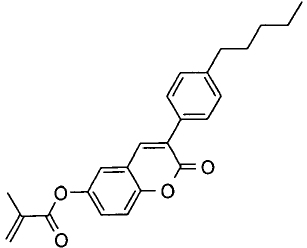 | 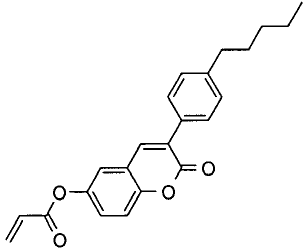 |
| **RM-18** | **RM-19** |
| 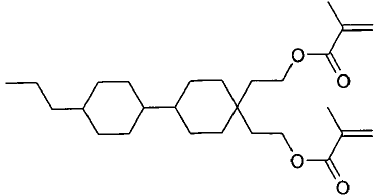 | 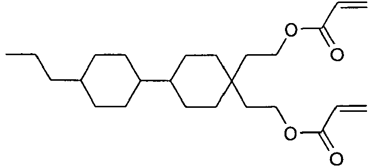 |
| **RM-20** | **RM-21** |
| 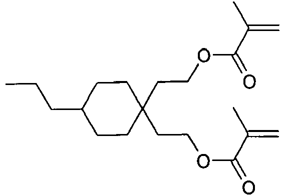 | |
| **RM-22** | |
| 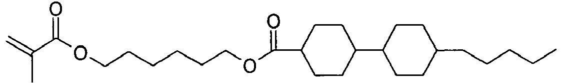 | |
| **RM-23** | |
| 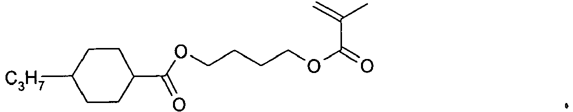 | |
| **RM-24** | |

In einer bevorzugten Ausführungsform der vorliegenden Erfindung enthalten die mesogenen Medien eine oder mehrere Verbindungen ausgewählt aus der Gruppe der Verbindungen der Tabelle D.
In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε_{∥}: dielektrische Permittivität parallel zum Direktor bei 20°C und 1 kHz,
- Δs: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und As bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀), sowie das Spannungswert für 50 % relativen Kontrast (V₅₀) angegeben werden

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 10 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. FK-Medien stammen von der Merck KGaA, Deutschland. PSS-1 (PSS-[3-(2-Aminoethyl)-amino]propyl-Heptaisobutyl substituted; CAS Registry-Nr. 444315-16-6) wurde von Aldrich bezogen. Die Strukturen PSS-1 bis PSS-9 und RM-1 sind der vorausgehenden Beschreibung zu entnehmen.

### Beispiel 1

Zu einem nematischen FK-Medium des VA-Typs (Δε < 0) gemäß Tabelle 1 werden eine polymerisierbare Verbindung (RM-1, 0,3 Gew.%) und die Diaminverbindung PSS-1 (0,25 Gew.%) zugesetzt und homogenisiert.

**Tabelle 1: Nematisches FK-Medium**

| | | | |
|---|---|---|---|
| CCH-501 | 9,00 % | Kp. | + 70,0 |
| CCH-35 | 14,00 % | Δn | 0,0825 |
| PCH-53 | 8,00 % | Δε | - 3,5 |
| CY-3-O4 | 14,00% | ε_{∥} | 3,5 |
| CY-5-O4 | 13,00% | K₃/K₁ | 1,00 |
| CCY-3-O2 | 8,00% | γ₁ | 141 |
| CCY-5-O2 | 8,00 % | V₀ | 2,06 |
| CCY-2-1 | 9,00 % | | |
| CCY-3-1 | 9,00 % | | |
| CPY-2-O2 | 8,00 % | | |

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 5,2 µm, beidseitige ITO-Beschichtung, ohne Passivierungsschicht). Das FK-Medium weist eine spontane homöotrope (vertikale) Orientierung zu den Substratoberflächen auf. Ohne Anlegen einer Spannung wird die Zelle 6 min mit UV-Licht der Intensität 100 mW/cm² bestrahlt. Dadurch erfolgt Polymerisation der monomeren Verbindung. Diese Orientierung bleibt bis 70 °C stabil. Im temperaturstabilen Bereich lässt sich die Zelle durch Anlegen einer Spannung zwischen 0 und 50 V reversibel schalten.

Die elektrooptischen Messergebnisse werden mit dem Vergleichsbeispiel 1 und 2 in Tabelle 2 verglichen.

### Vergleichsbeispiel 1

Zu einem nematischen FK-Medium des VA Typs gemäß Tabelle 1 wird nur die zuvor verwendete Diaminverbindung PSS-1 (0,25 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 5,2 µm, beidseitige ITO-Beschichtung, ohne Passivierungsschicht). Das FK-Medium weist eine spontane homöotrope (vertikale) Orientierung zu den Substratoberflächen auf.

Die bei Raumtemperatur beobachtete homöotrope Vororientierung verschwindet ab einer Temperatur von ca. 45 °C oder mehr. Eine planare Orientierung wird erhalten. Die elektrooptischen Messergebnisse werden in Tabelle 2 verglichen.

### Vergleichsbeispiel 2

Zu einem nematischen FK-Medium des VA-Typs gemäß Tabelle 1 wird nur die zuvor verwendete polymerisierbare Verbindung (RM-1, 0,3 Gew.%) zugesetzt und homogenisiert.

Verwendung in Testzellen mit VA-Polyimid:
Die entstandene Mischung wird in eine Testzelle gefüllt (antiparallel gerieben, Orientierungsschicht VA-Polyimid, Schichtdicke d ≈ 4 µm). Ohne anlegen einer Spannung wird die Zelle 6 min mit UV-Licht der Intensität 100 mW/cm² bestrahlt. Dadurch erfolgt Polymerisation der monomeren Verbindung.

Die elektrooptischen Messergebnisse werden in Tabelle 2 verglichen.

**Tabelle 2: Vergleich der Werte zu Beispiel 1 und Vergleichsbeispiel 1 und 2 für V₅₀:**

| **Bsp.** | **Anteil PSS-1** | **Anteil RM-1** | **V₅₀ (35 °C)** | **Orientierung bei 50 °C** |
|---|---|---|---|---|
| 1 | 0,25 % | 0,3 % | 2,61 V | vertikal |
| V1 | 0,25 % | - | 2,52 V | planar |
| V2 | - | 0,3 % | 3,23 V | vertikal |

### Beispiel 2

Zu einem nematischen FK-Medium des VA-Typs (Δε < 0) gemäß Tabelle 1 werden eine polymerisierbare Verbindung (RM-1, 0,3 Gew.%) und die Diolverbindung PSS-3 (1,0 Gew.%) zugesetzt und homogenisiert. Die spontane homöotrope Orientierung ist bis ca. 30 °C stabil und geht zwischen 40-60 °C vollständig in die planare Orientierung über. Die Mischung wird analog Beispiel 1 in einer Zelle polymerisiert. Die stabilisierte Mischung ist bis >50 °C homötrop ausgerichtet.

### Beispiele 3 bis 8

Analog Beispiel 2 werden die folgenden Verbindungen als Komponente (N) eingesetzt und das FK-Medium polymerisiert (Tabelle 3).

**Tabelle 3.**

| **Bsp.** | **PSS, Gew.-%** | **RM-1** | **Orientierung bei 50 °C** |
|---|---|---|---|
| 3 | PSS-4, 1 % | 0,3 % | homöotrop |
| 4 | PSS-5, 2 % | 0,3 % | homöotrop |
| 5 | PSS-6, 1 % | 0,3 % | homöotrop |
| 6 | PSS-7, 5 % | 0,3 % | homöotrop |
| 7 | PSS-8, 3,3 % | 0,3 % | homöotrop |
| 8 | PSS-9, 5 % | 0,3 % | homöotrop |

## Patentansprüche

1. FK-Medium enthaltend eine niedermolekulare flüssigkristalline Komponente mit einer negativen dielektrischen Anisotropie vom Wert Δε ≤ -1,5, eine polymerisierbare oder eine polymerisierte Komponente und eine Komponente (N) enthaltend Teilchen mit einer Masse von mindestens 450 Da, wobei die Teilchen eine oder mehrere organische polare Ankergruppen umfassen,
wobei die Ankergruppen Gruppen mit Atomen ausgewählt aus N, O, S und P umfassen,
und wobei die polymerisierte Komponente erhältlich ist durch Polymerisation einer polymerisierbaren Komponente.

2. FK-Medium nach Anspruch 1, **dadurch gekennzeichnet, dass** die Komponente (N) aus gelösten oder dispergierten Teilchen besteht.

3. FK-Medium nach Anspruch 1 oder 2, **dadurch gekennzeichnet, dass** die Teilchen der Komponente (N) ein Seitenverhältnis dₘₐₓ/dₘᵢₙ von höchstens 3:1 besitzen.

4. FK-Medium nach einem oder mehreren der Ansprüche 1 bis 3 **dadurch gekennzeichnet, dass** die Teilchen der Komponente (N) organische Moleküle sind.

5. FK-Medium nach einem oder mehreren der Ansprüche 1 bis 3 **dadurch gekennzeichnet, dass** die Teilchen der Komponente (N) organisch/anorganische Hybrid-Teilchen sind.

6. FK-Medium nach einem oder mehreren der Ansprüche 1 bis 5, **dadurch gekennzeichnet, dass** die Komponente (N) aus Silsequioxanverbindungen besteht.

7. FK-Medium nach einem oder mehreren der Ansprüche 1 bis 6 **dadurch gekennzeichnet, dass** die Teilchen der Komponente (N) durch eine oder mehrere Ankergruppen umfassend mindestens ein oder mehrere Heteroatome, ausgewählt aus N, O, S oder P, funktionalisiert sind.

8. FK-Medium nach einem oder mehreren der Ansprüche 1 bis 7, **dadurch gekennzeichnet, dass** die Komponente (N) durch eine Ankergruppe umfassend eine Gruppe der Teilformel 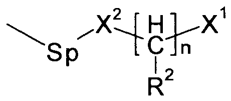 funktionalisiert ist, worin jeweils unabhängig
n 1, 2 oder 3,
X¹ eine Gruppe -NH₂, -NHR¹ -NR¹₂, -OR¹ oder -OH,
X² -NH-, -NR¹-, -O- oder eine Einfachbindung,
R¹ einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O-so ersetzt sein können, dass O-Atome nicht direkt miteinander verknüpft sind, und
R² H, F, Cl, CN, -OH, -NH₂, oder einen halogenierten oder unsubstituierten Alkylrest mit 1 bis 15 C-Atomen, wobei in diesem Rest auch eine oder mehrere CH₂-Gruppen jeweils unabhängig voneinander durch -C=C-, -CH=CH-, -(CO)O-, -O(CO)-, -(CO)-, -O-, -NH-, oder -NR¹- so ersetzt sein können, dass O-Atome nicht direkt miteinander verknüpft sind,
Sp eine Einfachbindung oder eine Abstandsgruppe definiert wie Sp^{a} wie nachstehend für Formel II definiert, bevorzugt eine Abstandsgruppe Sp"-X" wie für Formel II unten definiert, die über X" mit dem Teilchen verbunden ist, wobei Sp" ganz besonders eine Einfachbindung oder ein Alkylen mit 1 bis 12 C-Atomen,
bedeuten.

9. FK-Medium nach einem oder mehreren der Ansprüche 1 bis 8, **dadurch gekennzeichnet, dass** die Teilchen der Komponente (N) jeweils genau eine Ankergruppe aufweisen.

10. FK-Medium nach einem oder mehreren der Ansprüche 1 bis 9, **dadurch gekennzeichnet, dass** es die Teilchen der Komponente (N) in einer Konzentration von weniger als 10 Gew.-% enthält.

11. FK-Medium nach einem oder mehreren der Ansprüche 1 bis 10, **dadurch gekennzeichnet, dass** die polymerisierbare Komponente eine Verbindung der Formel II umfasst:
P^{a}-(Sp^{a})ₛ₁-A²-(Z¹-A¹)_{N}-(Sp^{b})ₛ₂-P^{b} II
worin die einzelnen Reste folgende Bedeutung besitzen:
P^{a}, P^{b} jeweils unabhängig voneinander eine polymerisierbare Gruppe,
Sp^{a}, Sp^{b} bei jedem Auftreten gleich oder verschieden eine Abstandsgruppe,
s1, s2 jeweils unabhängig voneinander 0 oder 1,
A¹, A² jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O-und/oder -S- ersetzt sein können und worin auch ein oder mehrere H-Atome durch F ersetzt sein können,
b) der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
c) der Gruppe bestehend aus Tetrahydropyran-2,5-diyl, 1,3-Dioxan-2,5-diyl, Tetrahydrofuran-2,5-diyl, Cylcobut-1,3-diyl, Piperidin-1,4-diyl, Thiophen-2,5-diyl und Selenophen-2,5-diyl, welche auch ein oder mehrfach durch L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 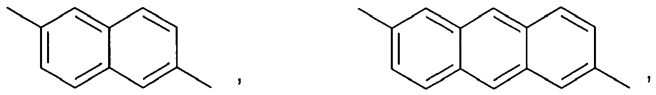 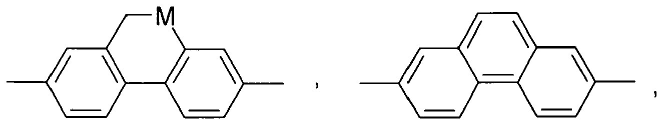 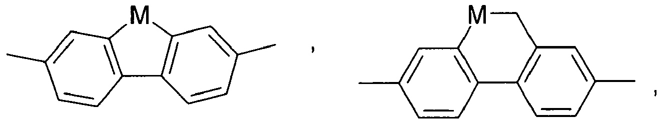 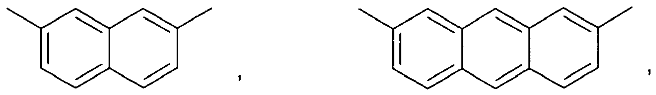 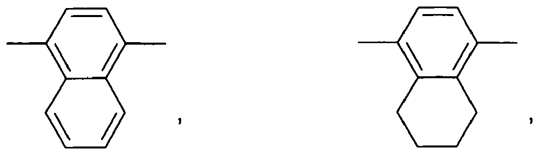 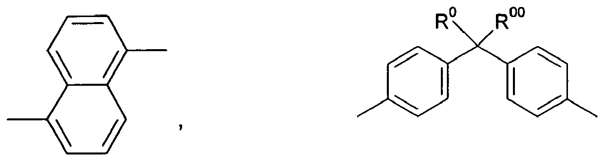 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{y}R^{z})-, -CH₂CF₂-, -CF₂CF₂-, oder eine Einfachbindung,
L bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹- oder -CY¹Y²-, und
Y¹ und Y² jeweils unabhängig voneinander eine der oben für R⁰ angegebenen Bedeutungen, Cl oder CN.

12. FK-Medium nach einem oder mehreren der Ansprüche 1 bis 11, **dadurch gekennzeichnet, dass** die Komponente (N) Teilchen umfasst, die eine oder mehrere polymerisierbare Gruppen aufweisen.

13. FK-Anzeige enthaltend eine FK-Zelle mit zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums nach einem oder mehreren der Ansprüche 1 bis 12, wobei die polymerisierte Komponente erhältlich ist durch Polymerisation einer oder mehrerer polymerisierbarer Verbindungen zwischen den Substraten der FK-Zelle im FK-Medium und
wobei die Komponente (N) geeignet ist, eine homöotrope Ausrichtung des FK-Mediums gegenüber den Substratoberflächen herbeizuführen.

14. FK-Anzeige nach Anspruch 13, **dadurch gekennzeichnet, dass** die Substrate keine Orientierungsschichten aufweisen.

15. FK-Anzeige nach Anspruch 13 oder 14, **dadurch gekennzeichnet, dass** es sich um eine VA-Anzeige mit auf gegenüberliegenden Seiten der FK-Zelle angeordneten Elektroden handelt.

16. Verfahren zu Herstellung einer FK-Anzeige enthaltend eine FK-Zelle mit zwei Substraten und zwei Elektroden, wobei mindestens ein Substrat lichtdurchlässig ist und mindestens ein Substrat eine oder zwei Elektroden aufweist, umfassend die Verfahrensschritte:
- Befüllen der Zelle mit einem LC-Medium enthaltend eine niedermolekulare flüssigkristalline Komponente, eine polymerisierbare Komponente und eine Komponente (N) nach einem oder mehreren der Ansprüche 1 bis 12, die geeignet ist, eine homöotrope (vertikale) Ausrichtung des FK-Mediums gegenüber den Substratoberflächen herbeizuführen, und
- Polymerisieren der polymerisierbaren Komponente, optional unter Anlegen einer Spannung an die Zelle oder unter der Wirkung eines elektrischen Feldes.

## Claims

1. LC medium comprising a low-molecular-weight liquid-crystalline component having negative dielectric anisotropy with a value Δε ≤ -1.5, a polymerisable or polymerised component and a component (N) comprising particles having a mass of at least 450 Da, where the particles contain one or more organic polar anchor groups,
where the anchor groups contain groups having atoms selected from N, O, S and P,
and where the polymerised component is obtainable by polymerisation of a polymerisable component.

2. LC medium according to Claim 1, **characterised in that** component (N) consists of dissolved or dispersed particles.

3. LC medium according to Claim 1 or 2, **characterised in that** the particles of component (N) have a side ratio dₘₐₓ/dₘᵢₙ of at most 3:1.

4. LC medium according to one or more of Claims 1 to 3, **characterised in that** the particles of component (N) are organic molecules.

5. LC medium according to one or more of Claims 1 to 3, **characterised in that** the particles of component (N) are organic/inorganic hybrid particles.

6. LC medium according to one or more of Claims 1 to 5, **characterised in that** component (N) consists of silsesquioxane compounds.

7. LC medium according to one or more of Claims 1 to 6, **characterised in that** the particles of component (N) have been functionalised by one or more anchor groups containing at least one or more heteroatoms selected from N, O, S and P.

8. LC medium according to one or more of Claims 1 to 7, **characterised in that** component (N) has been functionalised by an anchor group containing a group of the sub-formula 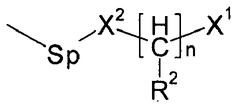 in which, in each case independently,
n denotes 1, 2 or 3,
X¹ denotes a group -NH₂, -NHR¹, -NR¹₂, -OR¹ or -OH,
X² denotes -NH-, -NR¹-, -O- or a single bond,
R¹ denotes a halogenated or unsubstituted alkyl radical having 1 to 15 C atoms, where, in addition, one or more CH₂ groups in this radical may each be replaced, independently of one another, by -C≡C-, -CH=CH-, -(CO)O-, -O(CO)-, -(CO)- or -O- in such a way that O atoms are not linked directly to one another, and
R² denotes H, F, Cl, CN, -OH, -NH₂, or a halogenated or unsubstituted alkyl radical having 1 to 15 C atoms, where, in addition, one or more CH₂ groups in this radical may each be replaced, independently of one another, by -C≡C-, -CH=CH-, -(CO)O-, -O(CO)-, -(CO)-, -O-, -NH- or -NR¹- in such a way that O atoms are not linked directly to one another,
Sp denotes a single bond or a spacer group defined like Sp^{a} as defined below for formula II, preferably a spacer group Sp"-X" as defined for formula II below, which is connected to the particle via X", where Sp" very particularly denotes a single bond or an alkylene having 1 to 12 C atoms.

9. LC medium according to one or more of Claims 1 to 8, **characterised in that** the particles of component (N) each contain precisely one anchor group.

10. LC medium according to one or more of Claims 1 to 9, **characterised in that** it comprises the particles of component (N) in a concentration of less than 10% by weight.

11. LC medium according to one or more of Claims 1 to 10, **characterised in that** the polymerisable component comprises a compound of the formula II:
P^{a}-(Sp^{a})ₛ₁-A²-(Z¹-A¹)ₙ-(Sp^{b})ₛ₂-P^{b} II
in which the individual radicals have the following meanings:
P^{a}, P^{b} each, independently of one another, denote a polymerisable group,
Sp^{a}, Sp^{b} on each occurrence, identically or differently, denote a spacer group,
s1, s2 each, independently of one another, denote 0 or 1,
A¹, A² each, independently of one another, denote a radical selected from the following groups:
a) the group consisting of trans-1,4-cyclohexylene, 1,4-cyclo-hexenylene and 4,4'-bicyclohexylene, in which, in addition, one or more non-adjacent CH₂ groups may be replaced by -O- and/or -S- and in which, in addition, one or more H atoms may be replaced by F,
b) the group consisting of 1,4-phenylene and 1,3-phenylene, in which, in addition, one or two CH groups may be replaced by N and in which, in addition, one or more H atoms may be replaced by L,
c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 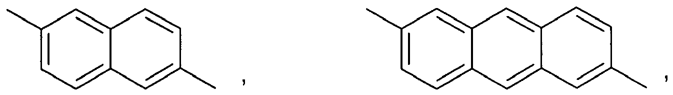 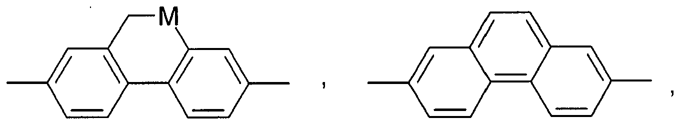 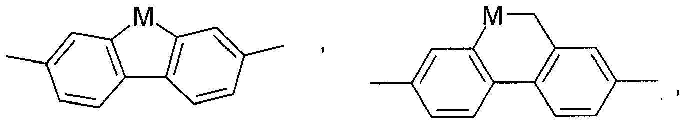 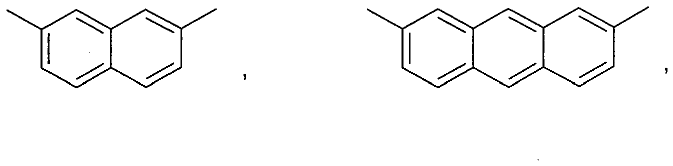 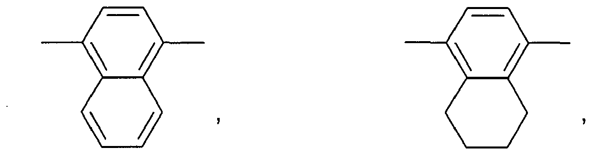 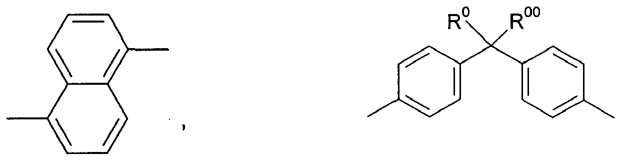 where, in addition, one or more H atoms in these radicals may be replaced by L, and/or one or more double bonds may be replaced by single bonds, and/or one or more CH groups may be replaced by N,
n denotes 0, 1, 2 or 3,
Z¹ in each case, independently of one another, denotes -CO-O-, -O-CO-, -CH₂O-, -OCH₂-, -CF₂O-, -OCF₂-, or -(CH₂)ₙ-, where n is 2, 3 or 4, -O-, -CO-, -C(R^{y}R^{z})-, -CH₂CF₂-, -CF₂CF₂- or a single bond,
L on each occurrence, identically or differently, denotes F, Cl, CN, SCN, SF₅ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms,
R⁰, R⁰⁰ each, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-, and
Y¹ and Y² each, independently of one another, have one of the meanings indicated above for R⁰ or denote Cl or CN.

12. LC medium according to one or more of Claims 1 to 11, **characterised in that** component (N) comprises particles which contain one or more polymerisable groups.

13. LC display comprising an LC cell having two substrates and two electrodes, where at least one substrate is transparent to light and at least one substrate has one or two electrodes, and a layer of an LC medium according to one or more of Claims 1 to 12 located between the substrates, where the polymerised component is obtainable by polymerisation of one or more polymerisable compounds between the substrates of the LC cell in the LC medium and where component (N) is suitable for effecting homeotropic alignment of the LC medium with respect to the substrate surfaces.

14. LC display according to Claim 13, **characterised in that** the substrates have no alignment layers.

15. LC display according to Claim 13 or 14, **characterised in that** it is a VA display having electrodes arranged on opposite sides of the LC cell.

16. Process for the production of an LC display comprising an LC cell having two substrates and two electrodes; where at least one substrate is transparent to light and at least one substrate has one or two electrodes, comprising the process steps of:
- filling of the cell with an LC medium comprising a low-molecular-weight liquid-crystalline component, a polymerisable component and a component (N) according to one or more of Claims 1 to 12 which is suitable for effecting homeotropic (vertical) alignment of the LC medium with respect to the substrate surfaces, and
- polymerisation of the polymerisable component, optionally with application of a voltage to the cell or under the action of an electric field.

## Revendications

1. Milieu LC comprenant un composant cristallin liquide de poids moléculaire faible présentant une anisotropie diélectrique négative d'une valeur Δε ≤ -1,5, un composant polymérisable ou polymérisé et un composant (N) comprenant des particules présentant une masse d'au moins 450 Da, où les the particules contiennent un ou plusieurs groupe(s) d'ancrage polaire(s) organique(s),
où les groupes d'ancrage contiennent des groupes comportant des atomes choisis parmi N, O, S et P,
et où le composant polymérisé peut être obtenu par polymérisation d'un composant polymérisable.

2. Milieu LC selon la revendication 1, **caractérisé en ce que** le composant (N) est constitué par des particules dissoutes ou dispersées.

3. Milieu LC selon la revendication 1 ou 2, **caractérisé en ce que** les particules du composant (N) présentent un rapport de côtés dₘₐₓ/dₘᵢₙ d'au plus 3 : 1.

4. Milieu LC selon une ou plusieurs des revendications 1 à 3, **caractérisé en ce que** les particules du composant (N) sont des molécules organiques.

5. Milieu LC selon une ou plusieurs des revendications 1 à 3, **caractérisé en ce que** les particules du composant (N) sont des particules hybrides organiques/inorganiques.

6. Milieu LC selon une ou plusieurs des revendications 1 à 5, **caractérisé en ce que** le composant (N) est constitué de composés silsesquioxane.

7. Milieu LC selon une ou plusieurs des revendications 1 à 6, **caractérisé en ce que** les particules du composant (N) ont été fonctionnalisées par un ou plusieurs groupe(s) d'ancrage contenant au moins un ou plusieurs hétéroatome(s) choisi(s) parmi N, O, S et P.

8. Milieu LC selon une ou plusieurs des revendications 1 à 7, **caractérisé en ce que** le composant (N) a été fonctionnalisé par un groupe d'ancrage contenant un groupe de la sous-formule : 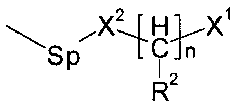 dans laquelle, dans chaque cas de manière indépendante,
n représente 1, 2 ou 3,
X¹ représente un groupe -NH₂, -NHR¹, -NR¹₂, -OR¹ ou -OH,
X² représente -NH-, -NR¹-, -O- ou une liaison simple,
R¹ représente un radical alkyle halogéné ou non substitué comportant 1 à 15 atome(s) de C, où, en outre, un ou plusieurs groupe(s) CH₂ dans ce radical peut/peuvent chacun être remplacé(s), indépendamment les uns des autres, par -C≡C-, -CH=CH-, -(CO)O-, -O(CO)-, -(CO)- ou -O- de telle sorte que des atomes de O ne soient pas liés directement les uns aux autres, et
R² représente H, F, Cl, CN, -OH, -NH₂, ou un radical alkyle halogéné ou non substitué comportant 1 à 15 atome(s) de C, où, en outre, un ou plusieurs groupe(s) CH₂ dans ce radical peut/peuvent chacun être remplacé(s), indépendamment les uns des autres, par -C≡C-, -CH=CH-, -(CO)O-, -O(CO)-, -(CO)-, -O-, -NH- ou -NR¹- de telle sorte que des atomes de O ne soient pas liés directement les uns aux autres,
Sp représente une liaison simple ou un groupe d'espaceur défini comme Sp^{a} comme défini ci-après pour la formule II, de façon préférable un groupe d'espaceur Sp"-X" comme défini pour la formule II ci-après, lequel est connecté à la particule via X", où Sp" représente de façon très particulière une liaison simple ou un alkylène comportant 1 à 12 atome(s) de C.

9. Milieu LC selon une ou plusieurs des revendications 1 à 8, **caractérisé en ce que** les particules du composant (N) contiennent chacune de façon précise un seul groupe d'ancrage.

10. Milieu LC selon une ou plusieurs des revendications 1 à 9, **caractérisé en ce qu'**il comprend les particules du composant (N) selon une concentration inférieure à 10% en poids.

11. Milieu LC selon une ou plusieurs des revendications 1 à 10, **caractérisé en ce que** le composant polymérisable comprend un composé de la formule II :
P^{a}-(Sp^{a})ₛ₁-A²-(Z¹-A¹)ₙ-(Sp^{b})ₛ₂-P^{b} II
dans laquelle les radicaux individuels présentent les significations qui suivent :
P^{a}, P^{b} présentent, chacun indépendamment de l'autre, un groupe polymérisable,
Sp^{a}, Sp^{b} représentent, pour chaque occurrence, de manière identique ou différente, un groupe d'espaceur,
s1, s2 représentent, chacun indépendamment de l'autre, 0 ou 1,
A¹, A² représentent, chacun indépendamment de l'autre, un radical choisi parmi les groupes qui suivent :
a) le groupe constitué par trans-1,4-cyclohexylène, 1,4-cyclohexénylène et 4,4'-bicyclohexylène, où, en outre, un ou plusieurs groupes CH₂ non adjacents peut/peuvent être remplacé(s) par -O- et/ou -S- et où, en outre, un ou plusieurs atome(s) de H peut/peuvent être remplacé(s) par F,
b) le groupe constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par L,
c) le groupe constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, dont chacun peut également être monosubstitué ou polysubstitué par L,
d) le groupe constitué par des radicaux polycycliques saturés, partiellement non saturés ou complètement non saturés, et en option substitués, comportant 5 à 20 atomes de C cycliques, dont un ou plusieurs peut/peuvent, en outre, être remplacé(s) par des hétéroatomes, de façon préférable choisis parmi le groupe constitué par bicyclo[1.1.1]pentane-1,3-diyle, bicyclo[2.2.2]octane-1,4-diyle, spiro[3.3]heptane-2,6-diyle, 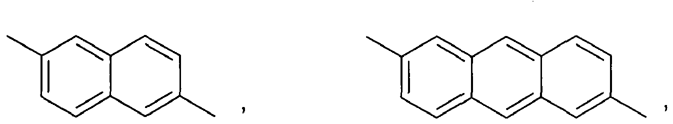 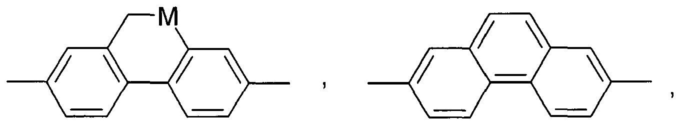 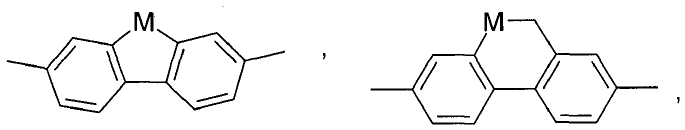 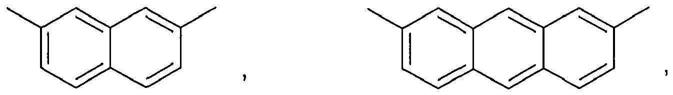 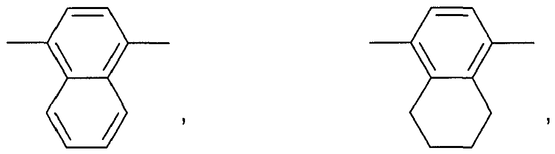 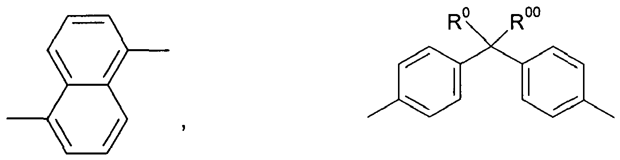 où, en outre, un ou plusieurs atome(s) de H dans ces radicaux peut/peuvent être remplacé(s) par L, et/ou une ou plusieurs liaison(s) double(s) peut/peuvent être remplacée(s) par des liaisons simples, et/ou un ou plusieurs groupe(s) CH peut/peuvent être remplacé(s) par N,
n représente 0, 1, 2 ou 3,
Z¹ représente, dans chaque cas indépendamment des autres cas, -CO-O-, -O-CO-, -CH₂O-, -OCH₂-, -CF₂O-, -OCF₂-, ou -(CH₂)ₙ-, où n est 2, 3 ou 4, -O-, -CO-, -C(R^{y}R^{z})-, -CH₂CF₂-, -CF₂CF₂- ou une liaison simple,
L représente, pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré, comportant 1 à 12 atome(s) de C,
R⁰, R⁰⁰ représentent, chacun indépendamment de l'autre, H, F ou alkyle en chaîne droite ou ramifié comportant 1 à 12 atome(s) de C, où, en outre, un ou plusieurs atome(s) de H peut/peuvent être remplacé(s) par F,
M représente -O-, -S-, -CH₂-, -CHY¹- ou -CY¹Y²-, et
Y¹ et Y² présentent, chacun indépendamment de l'autre, l'une des significations indiquées ci avant pour R⁰ ou représentent Cl ou CN.

12. Milieu LC selon une ou plusieurs des revendications 1 à 11, **caractérisé en ce que** le composant (N) comprend des particules qui contiennent un ou plusieurs groupe(s) polymérisable(s).

13. Affichage LC comprenant une cellule LC comportant deux substrats et deux électrodes, où au moins un substrat est transparent vis-à-vis de la lumière et au moins un substrat comporte une ou deux électrode(s), et une couche en un milieu LC selon une ou plusieurs des revendications 1 à 12 située entre les substrats, où le composant polymérisé peut être obtenu par polymérisation d'un ou de plusieurs composé(s) polymérisable(s) entre les substrats de la cellule LC dans le milieu LC et où le composant (N) convient pour réaliser un alignement homéotrope du milieu LC par rapport aux surfaces des substrats.

14. Affichage LC selon la revendication 13, **caractérisé en ce que** les substrats ne comportent pas de couches d'alignement.

15. Affichage LC selon la revendication 13 ou 14, **caractérisé en ce qu'**il s'agit d'un affichage VA comportant des électrodes agencées sur des côtés opposés de la cellule LC.

16. Procédé pour la fabrication d'un affichage LC comprenant une cellule LC comportant deux substrats et deux électrodes, où au moins un substrat est transparent vis-à-vis de la lumière et au moins un substrat comporte une ou deux électrode(s), comprenant les étapes de procédé consistant à :
- remplir la cellule avec un milieu LC comprenant un composant cristallin liquide de poids moléculaire faible, un composant polymérisable et un composant (N) selon une ou plusieurs des revendications 1 à 12 qui convient pour réaliser un alignement homéotrope (vertical) du milieu LC par rapport aux surfaces des substrats, et
- polymériser le composant polymérisable, en option moyennant l'application d'une tension sur la cellule ou sous l'action d'un champ électrique.
